# EUROPEAN PATENT SPECIFICATION

(11) **EP 3 192 692 B1**
(45) Date of publication and mention of the grant of the patent: **04.08.2021**
(21) Application number: 16151706.5
(22) Date of filing: 18.01.2016
(51) Int. Cl.: B60K 37/06, G06F 3/0488

(54) **CONFIGURABLE DIGITAL INSTRUMENT PANEL FOR A MOTOR VEHICLE**
KONFIGURIERBARE DIGITALE INSTRUMENTENTAFEL FÜR EIN KRAFTFAHRZEUG
PANNEAU D'INSTRUMENT NUMÉRIQUE CONFIGURABLE POUR UN VÉHICULE AUTOMOBILE

(43) Date of publication of application: 19.07.2017
(73) Proprietor: Parker Hannifin EMEA Sàrl, 1163 Etoy (CH)
(72) Inventor: Forsman, Tommi, 30100 FORSSA (FI)
(74) Representative: Berggren Oy

(56) References cited:
- EP-A1- 2 924 551
- US-A1- 2010 127 847
- US-A1- 2014 109 080

## Description

### TECHNICAL FIELD

The example and non-limiting embodiments of the present invention relate to configurable digital instrument panel for a motor vehicle.

### BACKGROUND

Throughout this text, references are made to a vehicle or a motor vehicle in general. Non-limiting examples vehicles applicable in this context include private on-road vehicles such as cars, commercial on-road vehicles such as buses and trucks, engineering vehicles such as tractors, excavators, bulldozers and caterpillars, forestry vehicles such as harvesters and forwarders, etc.

In modern motor vehicles, various pieces of vehicle information concerning operational status of an engine, functions of a vehicle as well as other attributes related to the vehicle are presented to the driver of the vehicle via an instrument panel and/or other components arranged in a dashboard of the vehicle. Similar, the dashboard typically provides various control mechanisms that enable the driver to adjust engine operation, other functions of the vehicle and/or other attributes related to the vehicle operation. The presented vehicle information and control mechanism play an important role in safe and efficient operation of the motor vehicle.

Traditionally, a dashboard of a motor vehicle such as a car, a bus or a truck has been provided with an instrument panel including a collection of analog instruments for displaying various vehicle and/or engine conditions (such as a speedometer, a tachometer, an odometer, a fuel gauge, etc.) together with analog indicators for indicating operational status of some vehicle and/or engine functions (such as current gearshift position, parking brake engagement light, an engine malfunction light, a low fuel indicator, etc.).

In recent decades, due to advances in information and display technologies, some of the analog instruments and/or indicators traditionally provided by analog components have been replaced with corresponding digital components, in other words with one or more small-scale display panels that are arranged to display the respective piece(s) of information to the driver of the motor vehicle. As a typical example in this regard, a small display panel may be employed to replace an odometer together with some of the indicators. Moreover, there exists solutions where the instrument panel in its entirety is provided as a digital display panel that is arranged to provide the driver with information concerning the vehicle and/or engine conditions that have been traditionally provided via analog instruments and/or indicators.

In many cases there may be a large amount of vehicle information available e.g. from the engine and/or from other vehicle functions, processing of which may require a significant processing power, while only small part of the vehicle information may be actually useful or desirable in a given vehicle and/or for a given driver. Moreover, the most appropriate way of presenting the vehicle information to the user may depend on the characteristics and requirements of the vehicle and/or preferences of the driver.

Even though digitalization of the instrument panel is likely to enable efficient and flexible design of the instrument panel and/or control mechanisms to meet the requirements of a given type of vehicle, in many cases the actual use of the vehicle and/or preferences of a driver of the vehicle may set requirements (and/or preferences) that are different from those applied in design of the instrument panel and/or control mechanisms available in the given type of vehicle, thereby possibly resulting in a design and/or functionality that is non-optimal or even unsuitable for the actual use of the vehicle. This issue may be especially pronounced e.g. in case of a multipurpose vehicle such as a tractor, where the actual use of the vehicle may not be known upon manufacturing the vehicle, where the actual use may vary from one occasion to another and/or where the actual use of the vehicle may be changed during its life-cycle, as well as in case of any 'shared' vehicle where the requirements and/or preferences of each driver are likely different from each other.

In related art, EP 2 924 551 A1 discloses a method for providing a graphical user interface in a vehicle, wherein the vehicle comprises at least two vehicle functions. In the method, at least first and second widget objects are displayed on a display surface, each with a first display content. In this case, the first and second widget objects are each assigned to a vehicle function and at least the first widget object is assigned a plurality of operating actions. An operator action is detected for the first widget object and it is determined which of the several operating actions matches the detected operator action. The first display content of the first widget object is changed to a second display content depending on the detected operator action.

Further in related in, US 2010/127847 A1 discloses a vehicle that includes a dashboard including one or more touchscreen displays; a wireless network interface; and multiple icons for presentation by one or more of the touchscreen displays to a user in the vehicle. Each of one or more of the icons is configurable by the user through tactile interaction with the icon via one or more of the touchscreen displays. Each of the icons when presented to the user makes accessible to the user through one or more of the touchscreen displays particular functionality.

Further in related in, US 2014/109080 A1 discloses an application store on board a vehicle. The application store contains, in one configuration, a plurality of applications for installation on an on board computer of the vehicle, with the applications provided to the vehicle operator being provided to the operator being based on predetermined types of information related to the vehicle, its state, operation, and/or configuration, vehicle location, vehicle type, make, model, and/or year of manufacture, and/or occupant(s) and/or occupant(s) of other vehicles

### SUMMARY

It is an object of the present invention to provide a technique for flexible provision of a digital instrument panel in a motor vehicle in accordance with current operating conditions of the motor vehicle and/or in accordance with user preferences. It is another object of the present invention to provide a configurable digital instrument panel for a motor vehicle that enables flexible configuration and reconfiguration of the instrument panel in accordance with user preferences.

According to an aspect of the present invention according to the subject-matter of the claim 13, an arrangement for providing a digital instrument panel in a motor vehicle is provided, the arrangement comprising an instrument panel storing means for storing a plurality of predefined digital instrument panel configurations, wherein a digital instrument panel configuration defines at least, one or more user interface, UI, components for conveying a respective piece of vehicle information to be included in the respective digital instrument panel, appearance of said one or more UI components in the respective digital instrument panel, and an activation event that defines a condition that causes selection of the respective instrument panel configuration; an instrument panel selection means for selecting an active instrument panel configuration from said plurality of predefined digital instrument panel configurations in dependence of respective activation events defined for the plurality of predefined digital instrument panel configurations; and an instrument panel display control means for controlling displaying of a digital instrument panel in accordance with the active instrument panel configuration via a display means arranged in a dashboard of the motor vehicle, wherein the arrangement comprises an instrument panel configuration means arranged enable creation of a user-defined instrument panel configuration and storing the created user-defined instrument panel configuration as one of the plurality of predefined digital instrument panel configurations, said creating comprising receiving, via a user input means provided in the motor vehicle, a user selection concerning one or more UI components from a set of a plurality of available predefined UI components for inclusion in the digital instrument panel, appearance of said one or more user-selected UI components in the digital instrument panel, and an activation event that defines a condition that is arranged to cause selection of the user-defined digital instrument panel configuration.

According to another aspect of the present invention according to the subject-matter of claim 1, a method for providing a digital instrument panel in a motor vehicle is provided, the method comprising storing a plurality of predefined digital instrument panel configurations, wherein a digital instrument panel configuration defines at least one or more user interface, UI, components for conveying a respective piece of vehicle information to be included in the respective digital instrument panel, appearance of said one or more UI components in the respective digital instrument panel, and an activation event that defines a condition that causes selection of the respective instrument panel configuration; selecting an active instrument panel configuration from said plurality of predefined digital instrument panel configurations in dependence of respective activation events defined for the plurality of predefined digital instrument panel configurations; and displaying, in a display means arranged in a dashboard of the motor vehicle, a digital instrument panel in accordance with the active instrument panel configuration, wherein the method comprises creating a user-defined instrument panel configuration and storing the created user-defined instrument panel configuration as one of the plurality of predefined digital instrument panel configurations, said creating comprising receiving, via a user input means provided in the motor vehicle, a user selection concerning one or more UI components from a set of a plurality of available predefined UI components for inclusion in the digital instrument panel, appearance of said one or more user-selected UI components in the digital instrument panel, and an activation event that defines a condition that is arranged to cause selection of the user-defined digital instrument panel configuration.

According to another example embodiment, a computer program is provided, the computer program comprising computer readable program code configured to cause performing at least the method according to the example embodiment described in the foregoing when said program code is run on a computing apparatus.

The computer program referred to above may be embodied on a volatile or a non-volatile computer-readable record medium, for example as a computer program product comprising at least one computer readable non-transitory medium having program code stored thereon, the program which when executed by an apparatus cause the apparatus at least to perform the operations described hereinbefore for the computer program according to an example embodiment of the invention.

The embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

Some features of the invention are set forth in the appended claims. Embodiments of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1 illustrates a block diagram of some entities of a vehicle information system according to an example embodiment;
Figure 2 illustrates a block diagram of some entities of a vehicle information system according to an example embodiment;
Figure 3 illustrates a block diagram of some entities of a vehicle information management means according to an example embodiment;
Figure 4 illustrates a block diagram of some entities of a vehicle information presentation means 140 according to an example embodiment;
Figure 5 schematically illustrates exemplifying widgets that may be employed in vehicle information system according to an example embodiment;
Figure 6 schematically illustrates an exemplifying digital instrument panel according to an example embodiment;
Figures 7A to 7E schematically illustrate an example of defining a digital instrument panel configuration using a configuration tool according to an example embodiment;
Figures 8 to 11 schematically illustrate the concept of sequences of processing components according to an example embodiment; and
Figure 12 illustrates a method according to an example embodiment.

### DESCRIPTION OF SOME EMBODIMENTS

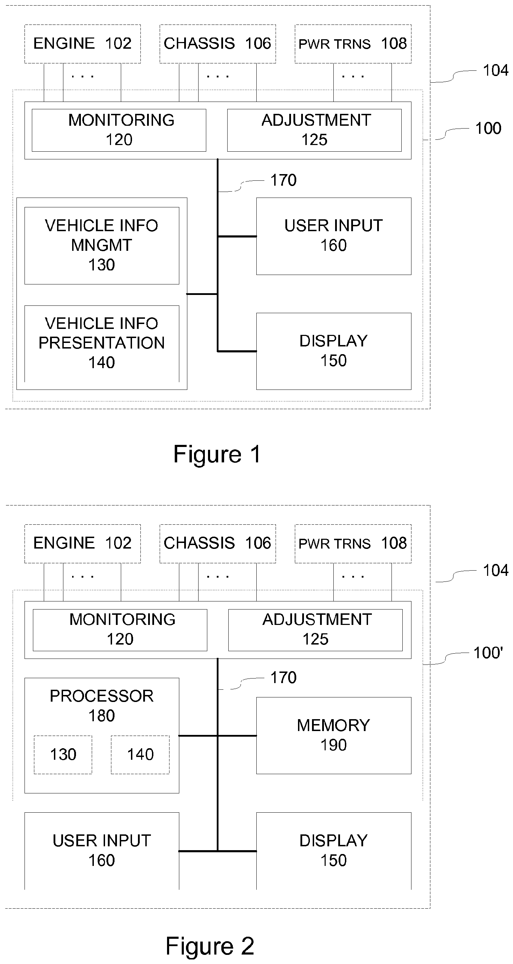

Figure 1 illustrates a block diagram of some (logical) entities of a vehicle information system 100 that may be employed to provide various example embodiments of the present invention. Entities of the vehicle information system 100 depicted in Figure 1 include a vehicle function monitoring means 120 for monitoring one or more characteristics of a vehicle 104. The monitored vehicle functions may include operation of an engine 102 of the vehicle 104, operation of a chassis 106 of the vehicle 104, a power transmission system 108 of the vehicle 104 and/or other functions of the vehicle 104. The vehicle information system further comprises a vehicle function adjustment means 125 for adjusting one or more characteristics of the vehicle 104. The vehicle information system further comprises a vehicle information management means 130 for controlling access to desired pieces of vehicle information available from the monitoring means 120 and for controlling access to vehicle adjustment function(s) available via the vehicle function adjustment means 125, and vehicle information presentation means 140 for arranging one or more of the desired pieces of vehicle information for presentation in a digital instrument panel to a user. Figure 1 further depicts display means 150 for displaying digital instrument panel, a user input means 160 for receiving control input from a user, and a data bus 170 for connecting the (other) entities of the vehicle information system 100 to each other. The vehicle information system 100 may comprise further entities in addition to those illustrated in Figure 1.

The vehicle information presentation means 140 may be considered, at least conceptually, to represent components of the digital instrument panel, whereas the vehicle information management means 130 may be considered, at least conceptually, to represent components of vehicle information transfer arrangement between the data bus 170 and the digital instrument panel and between the data bus 170 and the user input means 160.

In general, the display means 150 may comprise any electronic display known in the art that is suitable for use in a vehicle to provide the instrument panel. The user input means 160 may comprise any input mechanism known in the art that is suitable for in a vehicle, e.g. a touchpad, an arrangement of one or more keys, buttons or knobs. As a further example, the display means 150 and the user input means 160 may be provided jointly by a touch-sensitive display arrangement, e.g. as a touchscreen. The data bus 170 is arranged to provide electrical connection(s) between entities of the vehicle information system 100 in order to transfer control information, address information and/or data between entities interconnected by the data bus 170. Although referred to in singular, the data bus 170 may include multiple data buses that each connect a respective subset of components (e.g. sensors) of the vehicle function monitoring means 120 to the other entities of the vehicle information system 100, where some of the data buses may be linked to each via a respective gateway entity to enable connections between components of the vehicle function monitoring means 120 that are connected to different data buses.

As an example, the data bus 170 may be provided as one or more CAN buses (where the acronym CAN stands for Controller Area Network), described e.g. in ISO 11898 standard (where the acronym ISO stands for the International Organization for Standardization).

Each of the vehicle information management means 130 and the vehicle information presentation means 140 may be provided by respective hardware means, by respective software means or by a respective combination of hardware means and software means. As a non-limiting example of providing the vehicle information management means 130 and the vehicle information presentation means 140 as respective combinations of hardware means and software means, Figure 2 illustrates a block diagram of some entities of a vehicle information system 100', which is a variation of the vehicle information system 100.

In addition to the entities described in context of the vehicle information system 100, the vehicle information system 100' further comprises a processor 180 and a memory 190. The memory 190 is applied for storing computer program code, and the processor 180 may be arranged to control operation of the vehicle information system 100' e.g. in accordance with the computer program code stored in the memory 190 and possibly further in accordance with the user input received via the user input means 160. In this regard, respective portions of the computer program code stored in the memory 190 may be arranged to, with the processor 180, to provide the vehicle information management means 130 and the vehicle information presentation means 140, depicted in Figure 2 as logical entities within the processor 180. One or more further portions of the computer program code stored in the memory 190 may be arranged to provide further aspects of a control function for controlling at least some aspects of operation of the vehicle information system 100'. Moreover, the user input means 160 may be arranged, possibly together with the processor 180 and respective one or more portions of the computer program code, to provide at least some aspects of the user interface for controlling operation of the vehicle information system 100'.

Examples of each of the vehicle function monitoring means 120, the vehicle information management means 130 and the vehicle information presentation means 140 are described in detail in the following.

The vehicle function monitoring means 120 may comprise one or more sensors, each arranged to monitor a respective characteristic of the vehicle 104, e.g. a characteristic of the engine 102, a characteristic of the chassis 106, a characteristic of the power transmission line 108, or a characteristic of some other function of the vehicle 104. Each of the sensors may be arranged to provide captured sensor data in a respective sensor signal, and the sensor data may be made available to the vehicle information management means 130 (and possibly also to other entities of the vehicle information system 100, 100') in one or more respective vehicle information messages provided via the data bus 170.

Although described as components of the vehicle function monitoring means 120, each of the one or more sensors of the vehicle function monitoring means 120 is typically provided as a separate and dedicated sensor integrated to the respective component or part of the vehicle 104 such that it is able to fulfill its task of measuring the respective characteristic of vehicle operation. Hence, the one or more sensors do not typically constitute a single physical unit of multiple sensors that could concretely constitute the vehicle function monitoring means 120 but the one or more sensors rather constitute the vehicle function monitoring means 120 in a conceptual manner.

As a few non-limiting example, the one or more sensors of the vehicle function monitoring means 120 may include a respective sensor arranged to provide, in a respective sensor signal, sensor data that is descriptive of one of the following characteristics of operation of the vehicle 104:
- current engine speed (e.g. to enable providing a tachometer in the digital instrument panel);
- current engine coolant temperature;
- current engine oil temperature;
- distance travelled since a chosen reference point (e.g. to enable providing an odometer and/or a trip odometer in the digital instrument panel);
- current speed of the vehicle;
- current status of a door of the vehicle (e.g. "open" / "closed" / "unknown");
- current gearshift position;
- current status of the parking brake ("engaged" / "disengaged")
- currently remaining amount of fuel;

As another example, the one or more sensors in the vehicle function monitoring means 120 may comprise one or more cameras, each arranged to capture and provide the respective sensor signal as a video signal that depicts a view within the vehicle 104 or outside the vehicle 104. As a few examples in this regard, a camera may be arranged to capture and provide a video signal depicting a view directly in front of the vehicle 104, a view directly behind the vehicle 104, a view to a component within the vehicle 104 (such as a view to a door of the vehicle 104, either from inside or outside of the vehicle 104) or a view to a space within the vehicle 104.

The sensor signals employed in the vehicle function monitoring means 120 may carry the sensor data in an analog format or in a digital format. In case the sensor data is provided in the sensor signal in an analog format (e.g. as a signal whose voltage level or current level serves as an indication of measured engine characteristic), the vehicle function monitoring means 120 may be arranged to convert the sensor data into a digital format before provision to other entities of the vehicle information system 100, 100' in the respective one or more vehicle information messages. In case the sensor data is provided in the sensor signal in a digital format, the vehicle function monitoring means 120 may be arranged to forward the received sensor data as such to other entities of the vehicle information system 100, 100' in the respective one or more vehicle information message. The sensor data provided in the vehicle information messages may also be referred to as vehicle data and these terms are used interchangeably in the following. An entity within the vehicle function monitoring means 120 arranged control obtaining the sensor data from a given sensor and, possibly, to convert the obtained sensor data into a digital format for provision to other entities of the vehicle information system 100, 100' may be referred to as a respective sensor driver or device driver.

The vehicle function adjustment means 125 may comprise one or more actuators, each arranged to adjust or control a respective characteristic of the vehicle 104, e.g. a characteristic of the engine 102, a characteristic of the chassis 106, a characteristic of the power transmission line 108, or a characteristic of some other function of the vehicle 104 in dependence of a respective control signal received e.g. in one more control messages via the data bus 170.

Although described as components of the vehicle function adjustment means 125, each of the one or more actuators of the vehicle function adjustment means 125 is typically provided as a separate and dedicated actuator integrated to the respective component or part of the vehicle 104 such that it is able to fulfill its task of adjusting the respective aspect of vehicle operation. Hence, the one or more actuators do not typically constitute a single physical unit of multiple actuators that could concretely constitute the vehicle function adjustment means 125 but the one or more actuators rather constitute the vehicle function adjustment means 125 in a conceptual manner.

An entity within the vehicle function adjustment means 125 arranged to adjust or change operation of a given actuator therein in dependence of a respective control signal received via the data bus 170 and, possibly, to convert the respective control signal into a format suitable for controlling the given actuator in an intended manner may be referred to as a respective actuator driver or device driver

In addition to the to the vehicle information messages, the vehicle function monitoring means 120 may be arranged to provide one or more sensor status messages via the data bus 170 to other entities of the vehicle information system 100, 100' (to the vehicle information management means 130 in particular). As an example, a sensor status message may originate from a sensor of the vehicle function monitoring means 120, and the sensor status message may indicate the current operational status of the respective sensor. As another example, a sensor status message that indicates the current operational status of the respective sensor may be derived, in dependence of the respective sensor signal, in the vehicle function monitoring means 120 and hence the sensor status message may originate from the vehicle function monitoring means 120. For a given sensor, the respective sensor driver may be also arranged control generation of the sensor status messages for provision via the data bus 170 (in addition to control of provision of the sensor data).

The operational status of sensor may be indicated by using a sensor status indicator carried in the sensor status message. The sensor status indicator may be provided e.g. as a status bit, as a status code, as a status octet, as a status word, etc. As an example in this regard, the sensor status indicator may be a status bit or status code whose value indicates one of two predefined operational states, e.g. such that a first value (e.g. zero) indicates normal operation of the respective sensor and a second value (e.g. one) indicates an error or malfunction in operation of the respective sensor. In another example, the sensor status indicator may be a status code consisting of a plurality of bits, values of which indicates one of two or more predefined operational states, e.g. one state serving as an indication of a normal/valid operation of the sensor and one or more different error states, each serving as an indication of a respective abnormal or erroneous operation of the sensor.

A sensor status message may be provided separately from any vehicle information messages transferred, via the data bus 170, from the engine monitoring means 110 or from the vehicle function monitoring means 120. Alternatively, a sensor status message carrying sensor status indicator for a given sensor may be combined to the vehicle information message carrying sensor data from the same sensor, thereby resulting in provision of both the sensor data and the sensor status indicator jointly in the same message. A message transferred via the data bus 170 may be comprise a packet, a payload or a data structure of other type that carries the vehicle data, and the message may carry vehicle data, a sensor status indicator or both, possibly together with further information (e.g. header information, address information, etc.).

The vehicle function monitoring means 120 may be arranged to periodically provide the vehicle information messages and the respective sensor status messages. These messages may be provided e.g. at predefined intervals or according to another predefined schedule. A time series of vehicle information messages carrying vehicle data from a given sensor may be referred to as a respective vehicle information stream. Similarly, a time series of sensor status messages carrying sensor status indicators from a given sensor may be referred to as a respective sensor status stream. Herein, a sensor status data stream carrying sensor status indicators descriptive of the operational status of sensor serving as the source of sensor data carried in a vehicle information stream may be said to be associated with said vehicle information stream. Furthermore, the sensor status stream associated with a given vehicle information stream may be said to be a sensor status stream for the given vehicle information stream.

In addition to operating the actuators of the vehicle function adjustment means 125 in dependence of the respective control signals, the vehicle function adjustment means 125 may be arranged to provide one or more actuator status messages via the data bus 170 to other entities of the vehicle information system 100, 100' (to the vehicle information management means 130 in particular). As an example, an actuator status message may originate from an actuator of the vehicle function adjustment means 125, and the actuator status message may indicate the current operational status of the respective actuator. For a given actuator, the respective actuator driver may be also arranged control generation of the actuator status messages for provision via the data bus 170 (in addition to receiving the control signals in the reverse direction).

The examples in the foregoing concerning the format, content and transfer of sensor status messages via the data bus 170 to other entities of the vehicle information system 100, 100' apply to actuator status messages as well, mutatis mutandis.

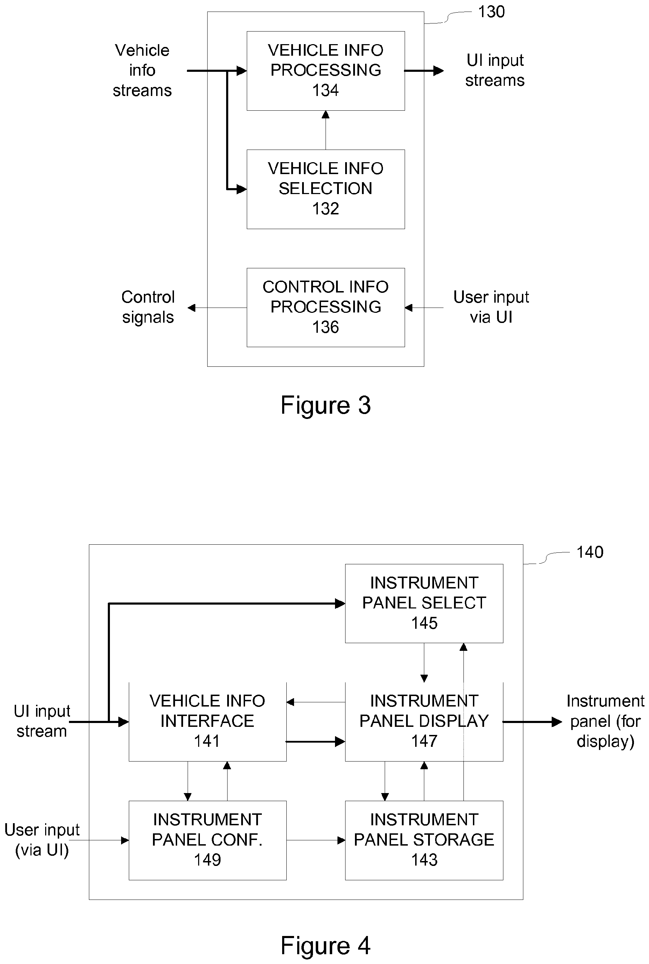

Figure 3 illustrates a block diagram of some components of the vehicle information management means 130. The vehicle information management means 130 may be arranged to receive one or more vehicle information streams and possibly also one or more sensor status streams via the data bus 170 and to receive user input via the user input means 160. The components of the vehicle information management means 130 shown in Figure 3 include a vehicle information selection means 132 for selecting one or more vehicle information streams, vehicle information processing means 134 for converting vehicle data received in vehicle information messages of the selected vehicle information stream(s) into a format that is suitable for presentation to a user in a digital instrument panel, and control information processing means 136 for converting user input received via the user input means 160 into respective control signals that are suitable for provision to the vehicle function adjustment means 125 via the data bus 170. The vehicle information processing means 134 may be arranged to process the vehicle information streams received from the vehicle function monitoring means 120 via a plurality of processing components to ensure efficient and flexible processing of vehicle information, whereas the control information processing means 136 may be arranged to process information that represents the user input received via the user input means 160 via a plurality of processing components to ensure efficient and flexible processing of control information. These aspects of the vehicle information processing means 134 and the control information processing means 136 will be described in more detail later in this text. The vehicle information selection means 132 may be further provided for selecting one or more sensor status streams. Each of the vehicle information selection means 132, the vehicle information processing means 134 and the control information processing means 136 will be described in more detail in the following.

The vehicle information selection means 132 may be arranged to select only those vehicle information streams that carry information considered necessary or useful in consideration of the given usage scenario of the vehicle 104. Thus, some of the vehicle information streams available from the vehicle function monitoring means 120 may be left unselected, thereby avoiding processing unnecessary information in the vehicle information management means 130. The vehicle information selection means 132 may be further arranged to select one or more sensor status streams of interest. Typically, although not necessarily, the sensor status streams for all selected vehicle information streams are selected.

In this regard, the vehicle information selection means 132 may be arranged to apply a predefined fixed selection of vehicle information streams and sensor status streams, configured e.g. upon manufacturing or installation of the vehicle information system 100, 100' in the vehicle 104, thereby enabling provision of a fixed and predefined selection of vehicle information available for presentation in a digital instrument panel. As another example, the vehicle information selection means 132 may be arranged to receive, via the user input means 160, a user selection of the vehicle information streams and sensor status streams of interest, thereby allowing increased flexibility for the user of the vehicle information system 100, 100' to tailor the available pieces of information to suit his/her requirements.

As described in the foregoing, the vehicle information processing means 134 may be arranged to convert the vehicle data received in the selected vehicle information streams into a format that is suitable for presentation to a user in a digital instrument panel. The converted vehicle data may be referred to as UI input data and it may be provided to the vehicle information presentation means 140 in respective UI input messages that constitute a time series of UI input messages that may be referred to as a UI input stream. The vehicle information processing means 134 may be arranged to derive UI input data for a UI input message of a given UI input stream on basis of vehicle data received in one or more vehicle information messages of one or more selected vehicle information streams. These one or more vehicle information messages may include e.g. one or more temporally consecutive messages of a single selected vehicle information stream or, as another example, these one or more vehicle information messages may include e.g. one or more temporally consecutive vehicle information messages of a first selected vehicle information stream together with one or more temporally consecutive vehicle information messages of a second selected vehicle information stream. Any processing of vehicle data carried out in the vehicle information processing means 134 is tailored to fit the characteristics of vehicle data received in each considered vehicle information stream in view of the information to be provided in the respective UI input messages for being displayed to a user in the digital instrument panel. As non-limiting examples, the processing carried out by the vehicle information processing means 134 may include one or more of the following:
- scaling of signal values of the vehicle data received in one or more vehicle information messages;
- limiting of signal values of the vehicle data in one or more vehicle information messages into a predefined range of values;
- filtering of signal values of the vehicle data received in one or more vehicle information messages e.g. in order to smooth short-term fluctuations in the signal value;
- converting information from a 'raw' representation format into a numeric format (e.g. converting a series of pulses whose frequency is indicative of current speed into a numerical representation of the current speed).

More detailed description of examples of operation within the vehicle information processing means 134 will be provided later in this text.

As described in the foregoing, the control information processing means 136 may be arranged to convert user input received via the user input means 160 into respective control signals that are suitable for provision to the vehicle function adjustment means 125 via the data bus 170. A control signal may be carried over the data bus 170 in one or more control messages. Any processing of user input into a respective control signal is tailored to fit the characteristics of the employed user input mechanism and the vehicle function under adjustment. As non-limiting examples, the processing carried out by the control information processing means 136 may include one or more of the following:
- converting a push of a button or touch event on a certain position of a touchscreen/touchpad into a respective control signal;
- converting certain position of a slider (either an electromechanical one or one provided in a touchscreen/touchpad into a respective control signal;
- limiting of signal values of the control signal into a predefined range of values;
- filtering of control signal values using a predefined (digital) filter.

The vehicle information presentation means 140 may be arranged to receive one or more UI input streams from the vehicle information management means 130 and to display a digital instrument panel to present UI input data received therein one or more UI input streams via the display means 150 to a user in accordance with the currently selected digital instrument panel configuration. A digital instrument panel configuration defines the pieces of vehicle information to be included in the digital instrument panel and their appearance in the digital instrument panel.

Figure 4 illustrates a block diagram of some components of the vehicle information presentation means 140, including a vehicle information interface means 141 for facilitating presentation of the vehicle information in the digital instrument panel, an instrument panel storing means 143 for storing a plurality of predefined digital instrument panel configurations, an instrument panel selection means 145 for selecting the active digital instrument panel from a plurality of predefined digital instrument panel configurations, and an instrument panel display control means 147 for controlling display and/or presentation of the digital instrument panel via the display means 150. The vehicle information presentation means 140 may further comprise an instrument panel configuration means 149 for enabling user selection of pieces of vehicle information to be included in a digital instrument panel configuration and their appearance in the digital instrument panel. Each of these components of the vehicle information presentation means 140 will be described in more detail in the following.

The vehicle information interface means 141 may be arranged define one or more user interface (Ul) components, each providing access to respective piece of UI input data received in the UI input streams. A UI component may be arranged at least to define the visual appearance of the respective piece of vehicle information in the digital instrument panel and to control provision of the respective piece of UI input data received in the respective UI input stream in the digital instrument panel. In other words, each such UI component serves to deliver sensor data received from the vehicle function monitoring means 120 for presentation in the digital instrument panel in a predefined manner. A UI component may be provided by software means, e.g. by a program code or a script stored in a memory accessible by the vehicle information system 100, 100' (e.g. the memory 190) which program code or script may be arranged to provide the UI component when executed by a processor accessible by the vehicle information system 100, 100' (e.g. the processor 180).

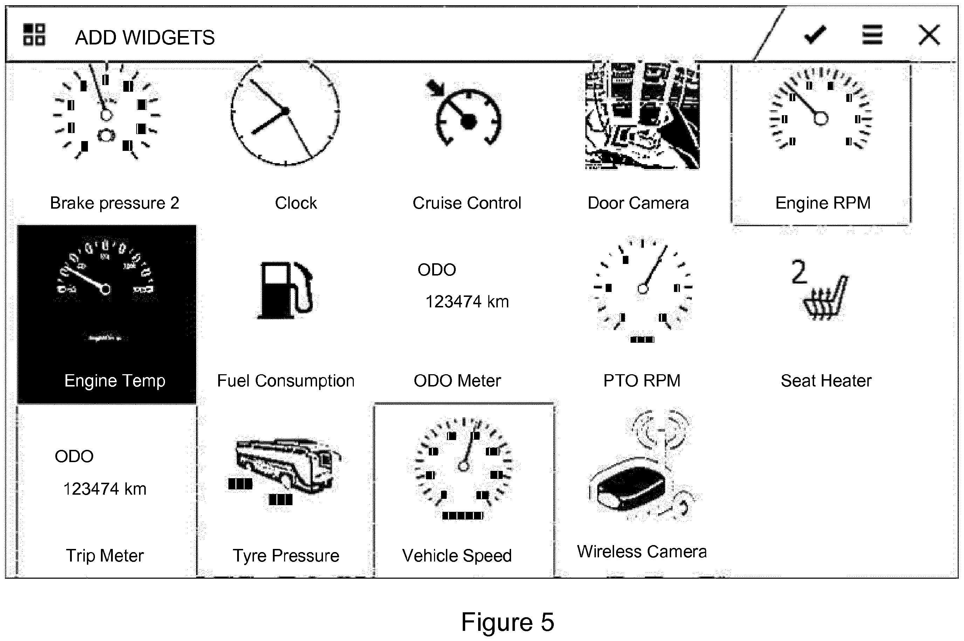

As a non-limiting example, such a UI component is referred to in the following as a widget. As an example, a respective widget may be made available to provide a digital presentation of various engine and vehicle functions, including ones that arranged to deliver a video stream (or a still image) depicting a target of interest within or in immediate vicinity of the vehicle 104. As concrete examples in this regard, Figure 5 illustrates the concept of widgets by schematically depicting a plurality of exemplifying widgets that are available for user selection (e.g. for user selection for inclusion in a digital instrument panel configuration), including respective widgets titled "Brake pressure 2", "Clock", "Cruise Control", "Door Camera", "Engine RPM", "Engine Temp", "Fuel Consumption"; "ODO meter", "PTO RPM", "Seat Heater", "Trip Meter", "Tyre Pressure", "Vehicle Speed" and "Wireless Camera".

Typically, a widget defines a fixed aspect ratio for its visual appearance in the digital instrument panel to ensure visual clarity of information it conveys, whereas the size (e.g. height and width) of its visual appearance and its position in the digital instrument panel may be selectable to provide flexibility in selecting and fitting in the widgets of interest in the digital instruments to account for the relevant requirements and/or preferences. Alternatively, at least some widgets may enable also selectable aspect ratio for its visual appearance in the digital instrument panel for further improved flexibility in the digital instrument panel design. A widget may further have a name and/or an icon representing the widget defined therefor.

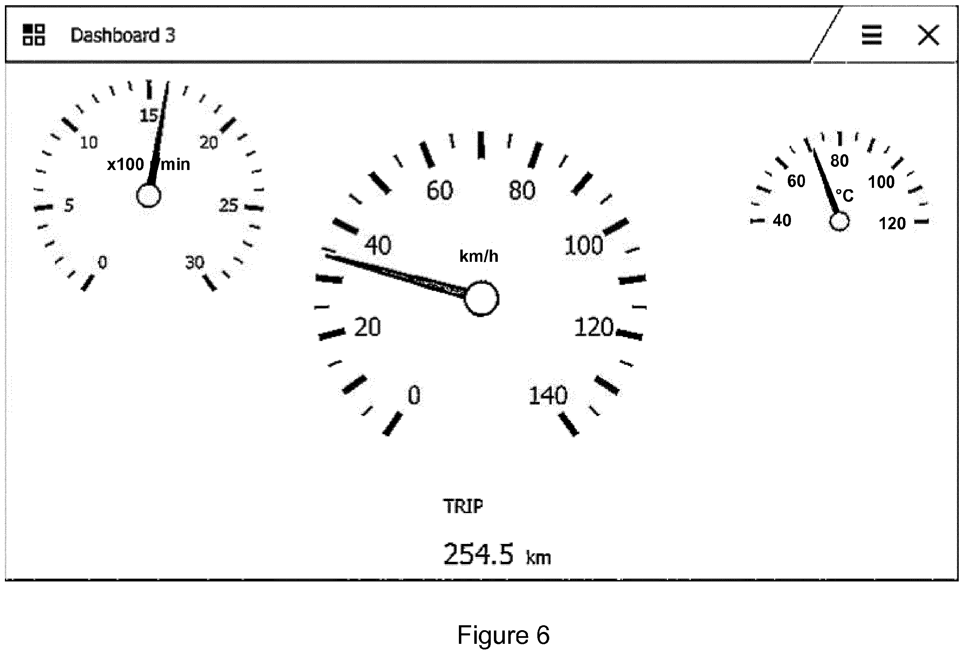

One or more widgets may be arranged in the digital instrument panel in accordance with a digital instrument panel configuration. Figure 6 schematically illustrates an example of a digital instrument panel according to exemplifying digital instrument panel configuration, which digital instrument panel makes use of some of the widgets shown in the example of Figure 5. In this regard, the exemplifying digital instrument panel of Figure 6 includes a tachometer (top left), a speedometer (upper in the middle, corresponding to the widget "Vehicle Speed" of Figure 5), a thermometer for engine temperature (top right, corresponding to the widget "Engine Temp" of Figure 5) and an odometer (lower in the middle). The provision of a digital instrument panel via the display means 150 according to various example embodiments is described in detail in the following.

The instrument panel storing means 143 may be arranged to store a plurality of predefined digital instrument panel configurations. Each predefined digital instrument panel configuration defines one or more widgets for presentation in the digital instrument panel. Moreover, a digital instrument panel configuration may have a name and/or an icon representing the respective digital instrument panel configuration defined therefor. A predefined digital instrument panel configuration may additionally define the appearance of the one or more widgets defined for the digital instrument panel. In particular, the appearance for a widget may be defined by defining the size of the respective widget in the digital instrument panel and/or the position of the respective widget in the digital instrument panel. The appearance of the widgets involved may be further defined by defining, for at least some of the widgets involved, the aspect ratio applied for the respective widget in the digital instrument panel.

A widget selected for a digital instrument panel may have one or more settings defined therefore. Examples in this regard include a default size of the widget in the digital instrument panel (defined e.g. as a minimum size of the widget in the digital instrument panel), a default aspect ratio of the widget in the digital instrument panel, a default position of the widget in the digital instrument panel, etc. In an example, in case one of these settings for a digital instrument panel configuration is left undefined, the respective default setting may be applied in displaying the respective digital instrument panel. In another example, in case a digital instrument panel configuration does not define positions of the widgets in the digital instrument panel, the widgets may be arranged in the displayed digital instrument panel according to a predefined rule (using respective defined sizes or default sizes), e.g. by arranging the widgets in the display line-by-line, starting from the top left corner, in a predefined order, where the predefined order may be e.g. an alphabetical order of widget name or the order in which the widgets have been selected for the respective digital instrument panel configuration.

A digital instrument panel configuration may further define further aspects related to the appearance of the digital instrument panel according the respective configuration. Such aspects may include e.g. a background color of the digital instrument panel, brightness and/or contrast of the image representing the digital instrument panel on the display means 150, etc. These characteristics of the digital instrument panel configuration may further depend on current operating conditions of a vehicle, e.g. such that the background color, brightness and/or the contrast may be defined separately for two or more different ambient lighting conditions. As an example in this regard, there may be a first setting (e.g. a 'daylight' setting) with bright colors, high brightness and/or high contrast and a second setting (e.g. a 'night' setting) with darker colors, lower brightness and/or lower contrast, where the selection between the first and second settings is made either on basis of a user selection made via the user input means 160 or in dependence of a measurement signal from an ambient light sensor such that a measurement signal indicating an ambient light level exceeding a predefined threshold results in selection of the first setting while a measurement signal indicating an ambient light level failing to exceed the predefined threshold results in selection of the second setting.

According to an example, only a limited subset of the predefined digital instrument panel configurations may be available to a given user. In particular, a user may have defined one or more digital instrument panel configurations for his/her use, as will be described in more detail later in this text, and these user-defined digital instrument panel configurations may be made available only for the user who has defined them. On the other hand, the plurality of predefined digital instrument panel configurations may include one or more generic digital instrument panel configurations that are available for all users of the vehicle information system 100, 100'. A user may be allowed to modify or delete digital instrument panel configurations he/she has defined for his/her own use, whereas a user may not be allowed to modify or delete the generic instrument panel configurations. A given user may be identified e.g. by requiring a user (or driver) to log in to the vehicle information system 100, 100' upon activation of the vehicle information system 100, 100' (e.g. upon switching on the power to the vehicle 104).

A predefined digital instrument panel configuration may further define control information that may be useable for the instrument panel selection means 145 (which will be described in the following) in selecting one of the predefined digital instrument panel configurations for display to the user via the display means 150. The currently selected digital instrument panel configuration may also be referred to as an active digital instrument panel.

The control information defined for a given digital instrument panel configuration may include an activation event. The activation event may define a trigger signal or a condition of other type that may invoke selection of this given digital instrument panel configuration as the active digital instrument panel configuration. As an example in this regard, a signal value of UI input data received in a UI input stream that exhibits one of one or more predefined values or that exhibits a value in a predefined range of values may serve as the activation event. A certain trigger signal or condition may serve as an activation event only for a single digital instrument panel configuration. Concrete examples in this regard include UI input data received in a UI input stream indicating that a certain gear (e.g. the reverse gear) is being engaged or disengaged, UI input data received in a UI input stream indicating that a certain door of the vehicle 104 is open, UI input data received in a UI input stream indicating that the current amount of fuel is below a predefined threshold amount, UI input data received in a UI input stream indicating that the current speed is above a certain threshold speed, etc.

The control information defined for a given digital instrument panel configuration may include a deactivation event. The deactivation event may define a de-trigger signal or a condition of other type that may invoke deselection of this given digital instrument panel configuration if it is currently being applied as the active digital instrument panel configuration. The condition constituting the deactivation event may be defined in a manner similar to that constituting the activation event. Hence, as an example, a signal value of UI input data received in a UI input stream that exhibits one of one or more predefined values or that exhibits a value in a predefined range of values may serve as the deactivation event. Quite naturally, the condition that defines the deactivation event must be different from the activation event defined for the same digital instrument panel configuration. Along the lines described for the activation event in the foregoing, concrete examples in this regard include UI input data in a received UI input stream indicating that a certain gear (e.g. the reverse gear) is being engaged or disengaged, UI input data in a received UI input stream indicating that a certain door of the vehicle 104 is closed, UI input data in a received UI input stream indicating that the current amount of fuel is above a predefined threshold amount, UI input data in a received UI input stream indicating that the current speed is below a certain threshold speed, etc.

As already becomes evident from the examples of activation events and deactivation events described in the foregoing, an activation event or a deactivation event may result indirectly from a user action such as engaging or disengaging a certain gear, opening or closing a door of the vehicle 104, changing the speed of the vehicle 104, etc. Additionally or alternatively, an activation event or a deactivation event may be a direct consequence of a driver action, such as the driver making a selection of a certain digital instrument panel configuration via the user interface of the vehicle information system 100, 100'.

The control information defined for a given digital instrument panel configuration may include a priority level indication. The priority level indicates relative priority with respect to priority levels defined for the other digital instrument panel configurations. The activation event, the deactivation event and the priority level indication described in the foregoing serve as non-limiting examples concerning the pieces of information that may be included in the control information.

One of the plurality of predefined digital instrument panel configurations stored by the instrument panel storing means 143 may be designated as a default instrument panel configuration. The default instrument panel configuration may be applied at least when a selection rule applied by an instrument panel selection means 145 (which will be described in the following) fails to select any of the plurality of the predefined digital instrument panel configurations in view of the control information defined therefor. The digital instrument panel configuration designated as the default one may or may not have the activation event defined therefor.

The instrument panel selection means 145 may be arranged to select the active digital instrument panel configuration from the plurality of predefined digital instrument panel configurations provided by the instrument panel storing means 143. In this regard, the instrument panel selection means 145 is arranged to make the selection according to a predefined selection rule. The selection rule may be arranged to control the selection in dependence of the control information defined for the predefined digital instrument panel configurations provided by the instrument panel storing means 143.

In particular, the instrument panel selection means 145 may be arranged to observe UI input data received one or more UI input streams in view of the activation events defined for the plurality of predefined digital instrument panel configurations provided by the instrument panel storing means 143 in order to detect a condition that constitutes the activation event for one of the predefined digital instrument panel configurations. In an example, the instrument panel selection means 145 may be arranged to select the digital instrument panel configuration for which the activation event is detected as the active instrument panel configuration regardless of the state of the activation event for the current active instrument panel configuration. This mode operation may be referred to as direct activation mode. In another example, in case the priority level indications are employed and available, the instrument panel selection means 145 may be arranged to consider priority level such that if activation events for two or more digital instrument panel configurations are detected, the one assigned the highest priority level is selected as the active instrument panel configuration. In case there are two or more digital instrument panel configurations for which the activation event is detected and that have the same priority level (which is the highest one among the digital instrument panel configurations for which respective activation events have been detected), the one for which the activation event has been detected earlier is selected as the active instrument panel configuration. This mode of operation may be referred to as conditional activation mode. In the conditional activation mode the condition for selecting the digital instrument panel configuration as the active instrument panel configuration is that the priority level of the digital instrument panel configuration for which the activation event is (newly) detected is higher than that of the current active instrument panel configuration.

The instrument panel selection means 145 may be arranged to observe UI input data received in one or more UI input streams further in view of deactivation events defined for the current active instrument panel configuration in order to detect a condition or a combination of conditions that constitute this deactivation event. Moreover, the instrument panel selection means 145 may be arranged to deselect the current active instrument panel configuration in response to detecting the deactivation event defined therefor and, consequently, possibly select another digital instrument panel configuration as the active one in dependence of the applied mode of operation. In case of the direct activation mode, deselection of the active instrument panel configuration is followed by selecting the most recently applied other digital instrument panel configuration. If there is no previously applied other digital instrument panel configuration available or information in this regard is not available, the default instrument panel configuration (if defined) or the most previously applied other application will be selected for display. In case of the conditional activation mode, deselection of the active instrument panel configuration is followed by selecting one of the (other) digital instrument panel configurations for which the activation event defined therefor is detected (according to their priority levels along the lines described in the foregoing), whereas in case no digital instrument panel configuration with detected activation event is detected, the default instrument panel configuration (if defined) or the most previously applied other application will be selected for display.

The instrument panel display control means 147 may be arranged to control presentation of the digital instrument panel via the display means 150 to a user. The instrument panel display control means 147 may be arranged to start displaying a digital instrument panel according to the newly-selected active digital instrument panel configuration via the display means 150 in response to selecting a digital instrument panel that is different from the one currently displayed. In an example, the change of displayed digital instrument panel may take place immediately or substantially immediately after the selection has been made. In another example, the change may be realized after a delay period of predefined duration. The delay period may have duration from a few tenths of a second to a few tens of seconds, and the delay period may facilitate avoiding unnecessary switching between instrument panel configurations that could otherwise occur due to vehicle conditions that meet the conditions defining an activation event only for short period of time or due to short-term disturbances in UI input data carried in the UI input messages of the UI input stream used as basis for activating or deactivating a given instrument panel configuration. In a further example, the delay period is applied in another way, i.e. such that the change of displayed digital instrument panel takes place immediately or substantially immediately after the selection has been made, but any further activation or deactivation events are ignored during the delay period that begins immediately after the instrument panel display control means 147 has changed to display the newly selected digital instrument panel configuration.

The instrument panel configuration means 149 may be arranged to enable user selection of pieces of vehicle information to be included in a digital instrument panel configuration and their appearance in the digital instrument panel. As an example in this regard, the instrument panel configuration means 149 may be arranged to enable selection of one or more UI components, e.g. widgets, made available by the vehicle information interface means 141. The widgets made available for selection by the user may include pre-defined widgets that may be stored e.g. in the memory 190 upon installation of the vehicle information system 100, 100' to the vehicle 104 and that are registered as widgets that are available for the user selection via the instrument panel configuration means 149. In this regard, the instrument panel configuration means 149 may provide the user, via the display means 150, with the possibility to select one or more of the widgets for inclusion for a given digital instrument panel configuration. The instrument panel configuration means 149 may further provide the user with the possibility to define one or more of the following aspects for each widget selected for the given digital instrument panel configuration:
- size of the widget;
- aspect ratio of the widget;
- position of the widget in the digital instrument panel.

The instrument panel configuration means 149 (or another entity of the vehicle information system 100, 100') may further provide the user with a user interface means that enables defining additional widgets to be stored in the memory 190 and to be registered as widgets that are subsequently available for the user selection via the instrument panel configuration means 149 (as described in the foregoing).

Moreover, the instrument panel configuration means 149 may further provide the user with the possibility to define or select one or more of the following aspects for the given digital instrument panel configuration:
- an activation event for the given instrument panel configuration;
- a deactivation event for the given instrument panel configuration;
- the priority level for the given instrument panel configuration;

As an example in this regard, the instrument panel configuration means 149 may be arranged to enable definition of a desired activation event. In particular, the instrument panel configuration means 149 may provide the user, via the display means 150, with the possibility to select one of the available UI input streams and to define a condition pertaining to the selected UI input stream to define the activation event for the given instrument panel configuration. The UI input streams made available for selection by the user may include a set of pre-defined UI input streams and that are registered as UI input streams that may serve as basis for an activation event. As another example, the instrument panel configuration means 149 may be arranged to enable definition of a desired deactivation event in a manner similar to described in the foregoing for definition of the activation event.

The user may be provided with the possibility to define e.g. the aspects of the digital instrument panel configuration and the aspects of the widgets included therein described in the foregoing via a configuration tool or configuration function that is operable via the display means 150 and the user input means 160. A digital instrument panel configuration defined on basis of the user input may be stored in the instrument panel storing means 143 for subsequent use as one of the plurality of predefined digital instrument panel configurations.

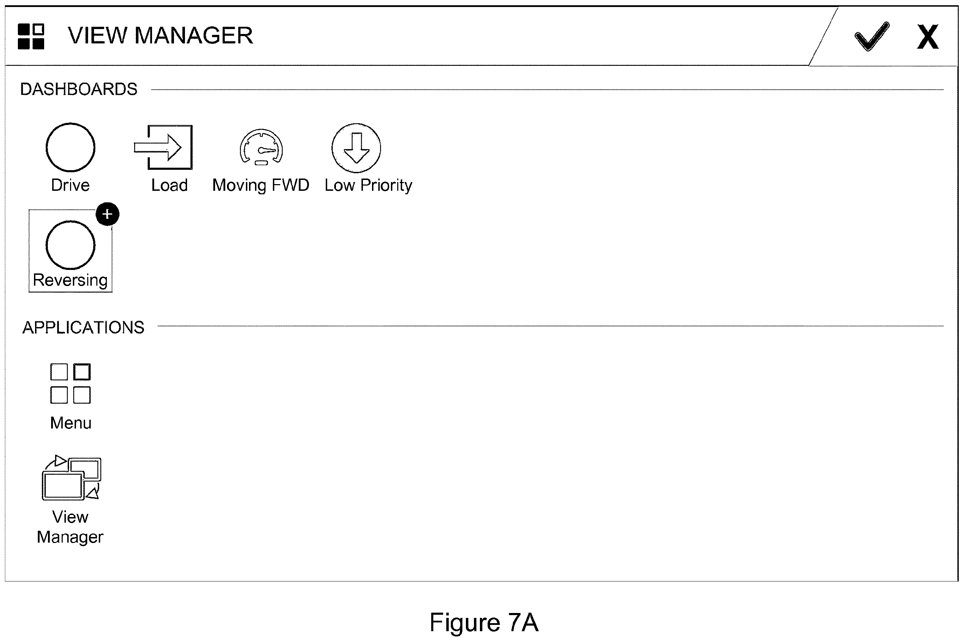

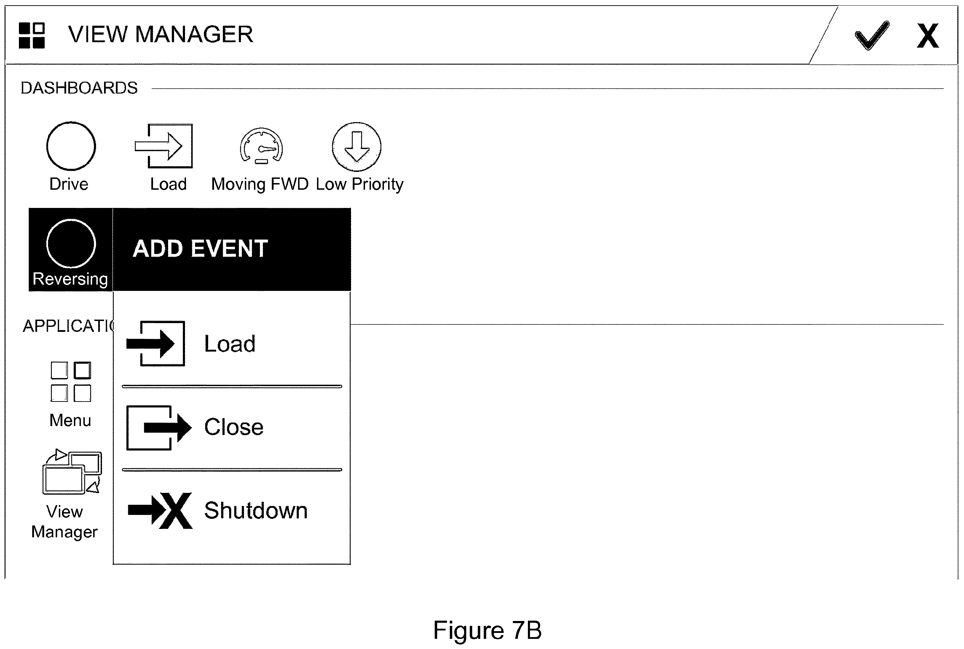

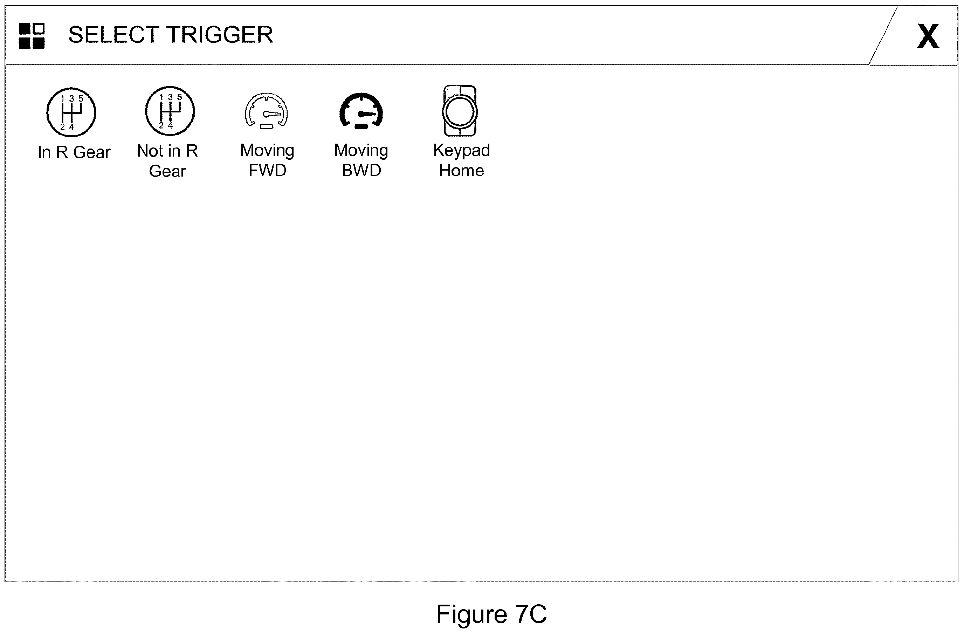

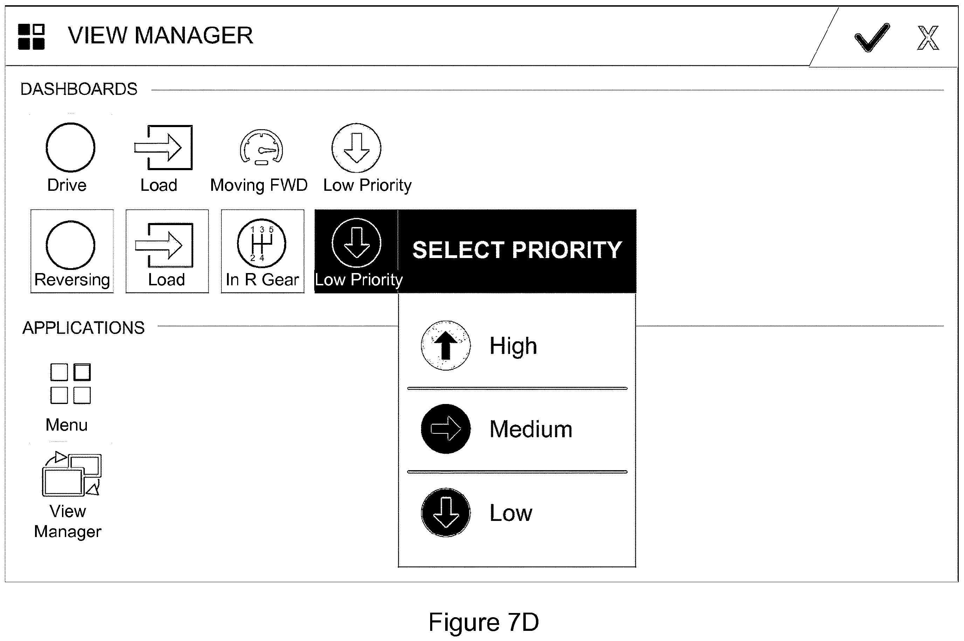

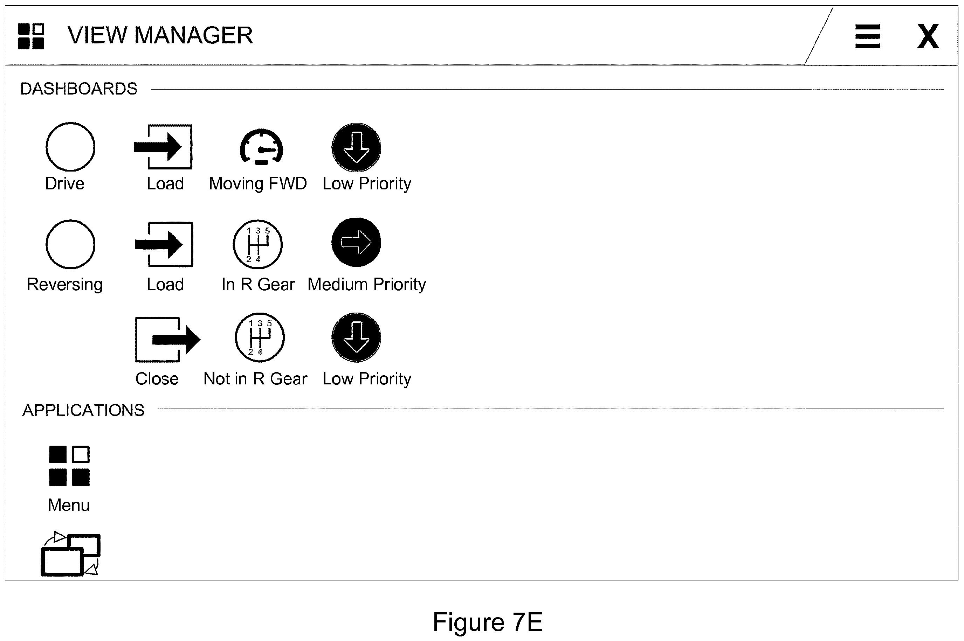

In the following, an example of operation of the configuration tool/function is described with references to Figures 7 to X. This example assumes application of a touch-sensitive display which hence jointly serves as the display means 150 and the user input means 160.
- The user starts the procedure by making a selection to define a new digital instrument panel configuration. As an example in this regard, Figure 7A schematically illustrates an initial step of defining a new digital instrument panel configuration titled "Reversing". Figure 7A further illustrates another digital instrument panel configuration tilted "Drive" defined earlier, for which an indication that the vehicle 104 is moving forward ("Moving FWD") serves as the activation event ("Load") and for which a priority level "Low Priority" has been selected.
- The user selects one or more widgets of interest for inclusion in the digital instrument panel configuration, e.g. from the widgets shown in Figure 5 and/or from one or more other sets of widgets made available for user selection.
- The user further selects an activation event for the new digital instrument panel configuration, which includes selecting the to-be-defined event as the activation event, as exemplified in Figure 7B that schematically illustrates the following set of available events: "Load", "Close", "Shutdown", and selecting a trigger signal or condition for the activation event, e.g. from a set of trigger signals/conditions made available for selection, as exemplified in Figure 7C that schematically illustrates the following set of available trigger signals/conditions: "In R Gear", "Not in R Gear", "Moving FWD", "Moving BWD", "Keypad Home".
- The user may further select the priority level for activation of the new digital instrument panel configuration from a set of priority levels made available for selection, as exemplified in Figure 7D that schematically illustrates the following set of available priority levels: "High", "Medium", "Low".
- The user may further select a deactivation event for the new digital panel configuration, which includes selecting the to-be-defined event as the deactivation event (e.g. by selecting the option "Close" from the choices illustrated in Figure 7B) and selecting a de-trigger signal or condition for the deactivation event (e.g. from a set of trigger signals/conditions events illustrated in Figure 7C), and further possibly select the priority level deactivation of the new digital instrument panel configuration (e.g. along the lines above defined for selection of the priority level for the activation event).

Figure 7E schematically illustrates some aspects of the newly defined instrument panel configuration titled "Reversing" together with the other instrument panel titled "Drive" defined earlier.

Referring back to the vehicle information processing means 134, as described in the foregoing, the vehicle information processing means 134 may be arranged to derive UI input data for UI input messages of a given UI input stream on basis of vehicle data received in one or more vehicle information messages of one or more selected vehicle information streams. Hence, the vehicle data represents raw data, which serves as basis for converting received information into UI input data carried in the respective UI input messages of the respective UI input stream in the vehicle information processing means 134.

The vehicle information processing means 134 may be arranged process vehicle data received in a vehicle information stream through a sequence of processing components. A processing component may also be referred to as a processing block. The sequence of processing components may define a processing path or a signal path for vehicle information starting from vehicle data as received in the vehicle information stream from the data bus 170 to the UI input data to be provided in the UI input stream to the vehicle information presentation means 140.

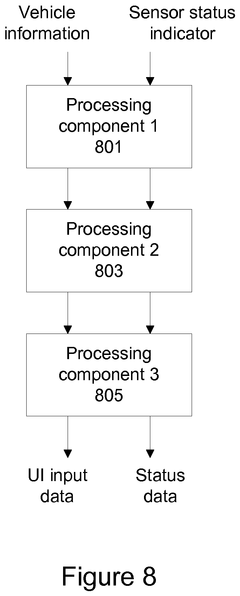

The illustration of Figure 8 provides a conceptual example in this regard by illustrating a sequence of three processing components 801, 803 and 805, where the vehicle information received in one or more vehicle information streams is processed first through the processing components 801 to 803 to the respective UI input data for provision in UI input messages of the respective UI input stream to the vehicle information presentation means 140. The illustration of Figure 8 further depicts the processing of sensor status indication through the processing components 801 to 803 into status data for provision in status messages of a respective status data stream to the vehicle information processing means 140. This aspect of the conceptual example of Figure 8 will be described later in this text.

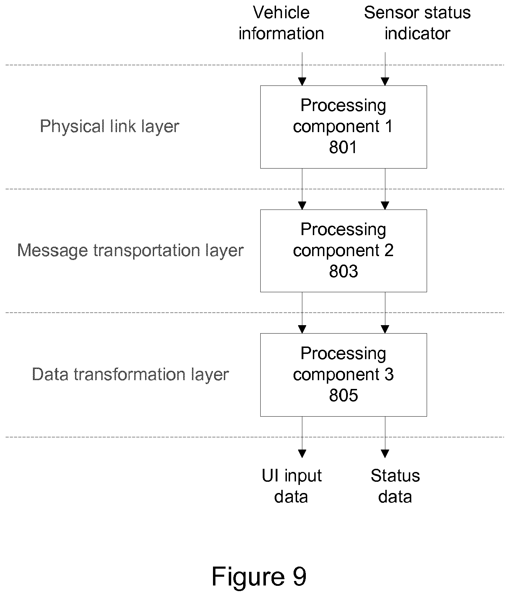

The sequence of processing components may comprise one or more processing components, each arranged to carry out a processing operation assigned thereto. The processing operation may be, for example, a predefined processing operation, a user-adjustable processing operation (e.g. such that the user may adjust one or more parameters and/or variables that control operation of the respective processing operation) or a user-definable processing operation (e.g. by using a suitable description language, pseudo-code or program code). The type of the processing operation depends on the role of the respective processing component. As a non-limiting example, each processing component may represent one of three conceptual layers. As an example in this regard, the processing path depicted in Figure 8 is shown in Figure 9 with each of the processing components 801, 803 and 805 assigned to one of the three layers such that the processing component 801 represents a processing operation in a physical link layer, the processing component 803 represents a processing operation in a message transportation layer and the processing block 805 represents a processing operation in a data transformation layer. The approximate roles of these layers of this conceptual layer structure are outlined in the following:
- The physical link layer directly interfaces the vehicle data received over the data bus 170 from a sensor (i.e. the sensor hardware) or the device drivers in the vehicle function monitoring means 120 on one side, and interfaces the message transportation layer on the other side. A processing component of the physical link layer handles transfer of vehicle data over the data bus 170 in a plurality of messages.
- The message transportation layer interfaces the physical link layer on one side and the data transformation layer on the other side. A processing component of the message transportation layer may be responsible for arranging signals received from the data transformation layer into one or more messages of the physical link layer and reconstructing one or more messages received from the physical link layer into a signal for the data transport layer. A message transportation layer processing block may further handle one or more of addressing, prioritization, timing control and bandwidth control of the physical link layer messages.
- The data transformation layer interfaces the message transportation layer on one side and the vehicle information presentation means 140 on the other side. A processing component of the data transformation layer may apply, for example, one of the following operations to process the signal received as input: scaling the signal, filtering the signal, limiting the signal, encrypting the signal, decrypting the signal, applying unit conversion to the signal, etc.

Although Figure 9 depicts one processing component for each of the three layers, this is not a requirement for a valid signal path. In general, a signal path there may be a plurality of (consecutive) processing components that represent the same layer, while it is not strictly necessary to have any processing components at all layers. Quite typically, though, there is a single physical link layer processing component for interfacing the data bus 170, at least one message transportation layer processing component to implement the interface between the data bus messages and the signal format applied in the UI input stream, and zero or more data transformation layer processing components that carry out necessary signal processing operations required for correct representation of the signal.

Each of the processing components preferably provide a relatively simple processing operation, such as identifying/selecting signals or messages that originate from a desired source (from a desired address), identifying/selecting signals or messages that represent at least a certain priority level, scaling signal values received as input data using a predefined scaling factor, limiting signal values received as input data to be within a predefined value range, filtering signal values received as input data using a predefined digital filter. Application of relatively simple processing operations as building blocks makes it easy to re-use the same processing component in a number of signal paths, thereby enabling a flexible but yet efficient design of suitable signal paths using e.g. a design tool that enables constructing desired signal paths on basis of predefined and/or configurable processing components that are selectable (and configurable) via a graphical user interface.

The first processing component of the sequence takes the vehicle data received in one or more vehicle information streams as its input data, applies the processing operation assigned thereto to the input data to derive respective output data, and provides the output data to the next processing component in the sequence. Hence, the vehicle data received in vehicle information messages of the vehicle information stream serve as input data to the signal path defined by the sequence of processing components. Each intermediate processing component (i.e. a processing component that is not the first one or the last one in the sequence), takes the output data of the preceding processing component of the sequence as its input data, applies the processing operation assigned thereto to the input data to derive respective output data, and provides the output data, if any, to the next processing component in the sequence. The last processing component of the sequence takes the output data of the preceding processing component of the sequence as its input data, applies the processing operation assigned thereto to the input data to derive respective output data, and provides the output data, if any, as the output data of the signal path defined by the sequence of processing components. This output is provided as the UI input data in a respective UI input message of the UI input stream to the vehicle information presentation means 140.

In other words, each processing component may receive its input data from an immediately preceding processing component of the sequence or from one or more vehicle information messages received via the data bus 170 that serve as the input data to the signal path defined by the sequence of processing components, carry out the respective processing operation to generate output data on basis of the input data, and provide the output data to an immediately following processing component of the sequence or as an output data of the signal path defined by the sequence or processing components for provision as UI input data in a UI input message to the vehicle information presentation means 140.

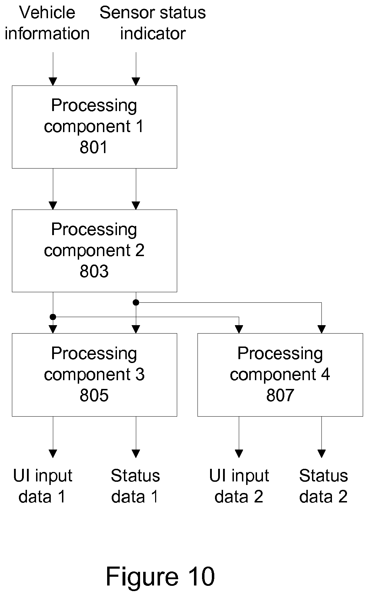

In the foregoing, the description implicitly assumed that each processing component is part of exactly one signal path between the data bus 170 and the vehicle information presentation means 140. In other examples one or more processing components in the beginning of the signal path may be shared with one or more other signal paths, thereby resulting in a signal path that branches into two or more sub-paths. The illustration of Figure 10 provides a conceptual example in this regard by illustrating a first signal path through the sequence of processing components 801, 803 and 805 and a second signal path through a sequence of processing components 801, 803 and 807.

In parallel, each processing component of sequence of processing components in the vehicle information processing means 134 may process status data. The status data may be indicative of the status of the respective processing component, indicative of status of one or more preceding processing components of the sequence and/or indicative of sensor status as received in sensor status messages of one or more sensor status streams received via the data bus 170. Consequently, the status data may indicate operational status of the respective processing component, operational status of one or more preceding processing components in the sequence, and/or status of a sensor serving as the source for vehicle data being processed by the sequence of processing components. Furthermore, the status data may, alternatively or additionally, denote operational status of the data bus 170 and/or that of some other component of the vehicle information system 100, 100'.

The status data may comprise a respective component status indicator for one or more processing components and/or the sensor status indicator (that is described in the foregoing). In particular, each processing component may receive an input status data from the preceding processing component of the sequence and to convey the input status data as an output status data to the next processing component in the sequence. The input status data may include respective component status indicator of one or more preceding processing components of the sequence and/or the sensor status indicator obtained from the vehicle function monitoring means 120 via the data bus 170. A given processing component may complement the input status data with the component status indicator that indicates the current status of the given processing component and to provide the complemented input status data as the output status data to the next processing component in the sequence. In case of the first processing component of the sequence the input status data may comprise the sensor status indicator (received in a vehicle information message via the data bus 170) or the first processing component of the sequence may receive no input status data at all (or may receive or start with an empty input status data). In case of the last processing component of the sequence the output status indicator may be provided to the vehicle information presentation means 140. Consequently, the sequence of processing components may be arranged to transfer the status indication through the sequence of processing components, e.g. (from the sensors of the vehicle function monitoring means 120 or) from the first processing component of the sequence to the output of the last processing component of the sequence, while at the status indicator may complemented the with the respective component status indicator at one or more processing components of the sequence, thereby providing information that is indicative of the overall status (or 'health') of the signal path (from the sensor or) from the first processing component of the sequence all the way to the vehicle information management means 140.

The status data may be transferred through the sequence of processing components separately from the vehicle data that is being processed through the sequence. Alternatively, the status data may be carried jointly with the vehicle data, e.g. in the same message, in the same packet or in the same data structure with the respective vehicle data. In particular, the output status of the last processing component of the sequence may be provided as output status data from the vehicle information processing means 134 in a time series of status data messages that constitute a status data stream. In this regard, the vehicle information processing means 134 may be arranged to periodically provide a status data message. The status data messages may be provided e.g. at predefined intervals or according to another predefined schedule. The status data messages of the status data stream may be provided to the vehicle information presentation means 140 separately from the UI input messages of the UI input stream or they may be provided to the vehicle information presentation means 140 jointly with the UI input messages of the UI input stream (e.g. in respective shared packets, payloads or data structures of other type).

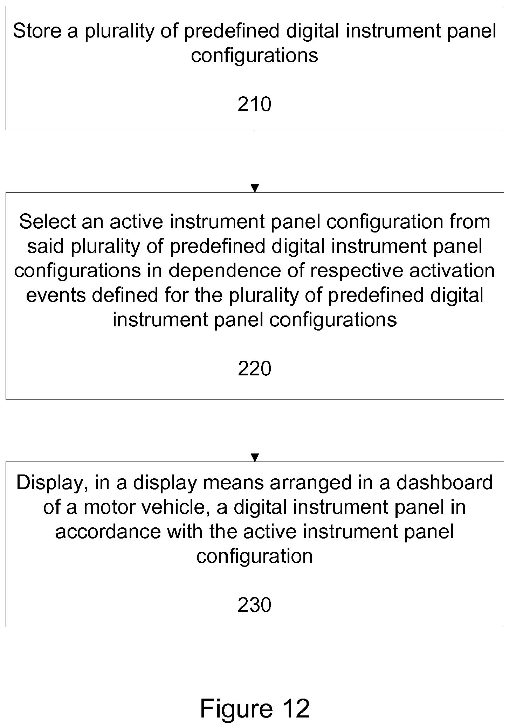

Referring back to the illustrations of Figures 8 and 12, in the illustration of Figure 8 the status data is processed via the first signal path through the sequence of processing components 801, 803 and 805 while in the illustration of Figure 10 the status data is additionally processed via the second signal path through a sequence of processing components 801, 803 and 807. Consequently, the respective component status indicators contributed by the processing components 801 and 803 appear both in the status stream output from the processing component 805 and in the status stream output from the processing component 807, while these two status streams are typically different due to respective component status indicators introduced by the processing components 805 and 807. However, the status data in the two status data streams (denoted as "Status data 1" and "Status data 2" in Figure 12) uniquely describe the overall status (or 'health') of the respective signal sub-paths.

The component status indicator for a processing component may be provided e.g. as a status bit, as a status code, as a status octet, as a status word, etc. In a straightforward example the component status indicator may be a status bit whose value indicates one of two predefined operational states, e.g. such that a first value (e.g. zero) indicates normal operation of the respective processing component and a second value (e.g. one) indicates an error or malfunction in operation of the respective processing component. In another example, the component status indicator may be a status code consisting of a plurality of bits, values of which indicates one of two or more predefined operational states, e.g. one state serving as an indication of a normal/valid operation of the respective processing component and one or more different error states, each serving as an indication of a respective abnormal or erroneous operation of the respective processing component.

Each of the error states may be associated with a respective status element that defines status information pertaining the respective error condition, which status information may be made use of e.g. by presenting an indication of the respective error condition to a user/driver via a user interface (e.g. via the display means 150) and/or by storing the status data in a log e.g. in the memory 190 or in a mass storage device for subsequent analysis by the user/deriver or by maintenance personnel. In particular, the storing of the status data in the log may take place periodically, e.g. at predefined intervals or according to other predefined schedule. While basically the status data at any (or all) of the processing components may be stored, the storing is preferably carried out only in the last processing component of the sequence, where the full set of status data indicative of statuses of all processing components of the sequence is available.

In a further example, the component status indicator may comprise a set of status bits, each status bit indicating active or inactive status of the respective predefined status element, e.g. such that a first value (e.g. zero) of a given status bit indicates that the respective status element is inactive and a second value (e.g. one) of the given status bit indicates active status for the respective status element. In such an arrangement all status bits of the component status indicator set to the first value may serve as an indication of normal operational state of the respective processing component, whereas one or more status bits of the component status indicator set to the second value indicate an abnormal or erroneous operational state of the respective processing component, which operational state is further defined by the status information defined for the respective status elements associated with those status bits that are set to the second value.

The status information defined for a status element may include e.g. one or more of the following:
- identifier bit mask for the status element;
- Status element name;
- Status element category or type;
- Textual description of the status element;
- An indication of the layer type (e.g. physical data link, message transportation, data transformation) to which the status element pertains.

Examples of status element categories or types include a configuration error, a communication error and a data error. A configuration error may occur in a processing block of the physical link layer e.g. due to an illegal or invalid combination of operation parameters defined for the processing component or due to a failure to transmit or receive messages over the data bus 170. A communication error may occur in a processing block of the message transportation layer e.g. due to a failure to receive any input data from the preceding processing component of the sequence, due to a reception of invalid input data from the preceding processing component of the sequence (without respective component status indicator suggesting an erroneous operation of the respective processing component), or due to a failure to receive or transmit a complete set of messages within a predefined time window. A data error may occur in a processing block of the data transformation layer e.g. due to input data or output data in a given processing component being out of a predefined range.

The name, the category/type and/or the description of the status element may be employed in providing the information concerning the current status for the log stored e.g. in the memory 190 or in a mass storage device and/or in an indication provided to a user/driver of the vehicle 104 via the user interface, e.g. via the display means 150. E.g. the name and the category/type of the status element may be also employed in subsequent analysis of the logged status data by the user/deriver, by maintenance personnel or by automated analysis tools. Furthermore, some of the information defined for the status element, e.g. the category/type of the status element, may be applied in providing an alarm associated with a processing component, as will be described by an example later in this text.

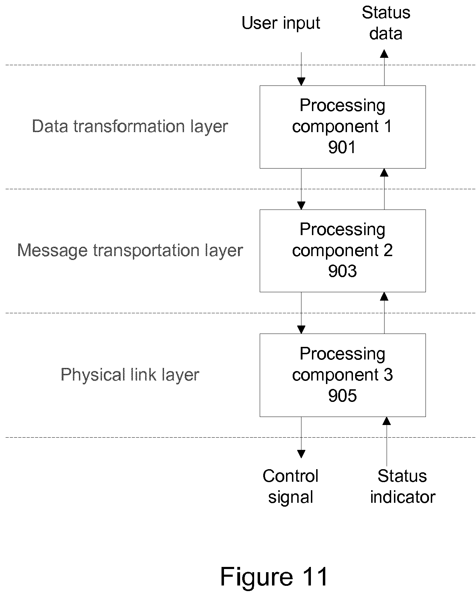

Referring back to the control information processing means 136, as described in the foregoing, the control information processing means 136 may be arranged to convert user input received via the user input means 160 into respective control signals that are suitable for provision to the vehicle function adjustment means 125 via the data bus 170. In this regard, the control information processing means 136 may be arranged process the user input through a sequence of processing components (or processing blocks). The sequence of processing components may hence define a processing path or a signal path for the control information starting from the user input as received from the user input means 160 to the control signal to be carried via the data bus 170 (e.g. in one or more messages) to a respective component of the vehicle function adjustment means 125. The illustration of Figure 11 provides a conceptual example in this regard by illustrating a sequence of three processing components 901, 903 and 905. As a non-limiting example, the illustration of Figure 13 shows these three processing components to represent processing blocks of the data transformation layer, the message transportation layer and the physical link layer, respectively.

The illustration of Figure 13 further depicts the processing of status indication through the processing components 905 to 901 into status data for provision to vehicle information processing means 140 and/or for storage e.g. in the memory 190. Herein, the status information flows through the processing components 905 to 901 in a direction opposite to that of the control information, i.e. from direction of the data bus 170 towards the vehicle information processing means 140 (or from direction of the physical link layer towards the data transformation layer). Apart from the direction of the status information flow in relation to the direction of the other data flow in the processing components that constitute the signal path, the examples described in the foregoing with respect to format, content and transfer of status information through the signal path apply to the status information of an arrangement according to the example of Figure 11 as well.

The vehicle information management means 130 may further comprise a signal path configuration means or a signal path configuration tool that is arranged to enable a user to define a signal path for vehicle information or for control information via the user input means 160. Alternatively, the signal path configuration means may be made available in separate device or system that is connectable to the data bus 170 via a connection port and that may hence be coupled to the entities of the vehicle information system 100, 100'. Typically, the signal path configuration tool is not made available to the end-user, e.g. the driver of the vehicle 104, but only to professional personnel during configuration of the vehicle information system 100, 100' during the manufacturing phase of the vehicle and/or during service operations applied to the vehicle 104.

In an example, the signal path configuration means may enable selection of desired processing components from a set of available predefined processing components and arrangement of the selected processing components into a signal path for vehicle information or for control information in a desired manner, thereby defining a respective UI input stream or a control signal. The UI input stream so defined may be registered as an UI input stream that may serve as basis for an activation event or a deactivation event for a (user-configurable) digital instrument panel configuration. Herein, the available processing components may comprise one or more processing components that are arranged to carry out a respective predefined processing operation, one or more processing components that are arranged to carry out a respective user-adjustable processing operation (e.g. such that the user may adjust one or more parameters and/or variables that control operation of the respective processing operation) and/or one or more processing components that may be arranged to carry out a user-definable processing operation (e.g. by using a suitable description language, pseudo-code or program code).

The status data transferred in and/or through the sequence of processing components may be employed to implement one or more alarms. In this regard, a processing component of the sequence may have one or more alarm conditions defined therefor. An alarm condition is associated with the component status indicator of the same processing component. In particular, an alarm condition may be defined on basis of statuses of one or more status elements. As an example, an alarm may be invoked in response to one or more status elements in the processing component indicating a condition or a combination of conditions that meets the alarm condition. An alarm condition may require, for example, that a given status element of the processing component has been active for a first predefined period of time, that one of a plurality of predefined status elements of the processing component have been active for the first predefined period of time, or that all of a plurality of predefined status elements of the processing component have been active for the first predefined period of time. In parallel, an invoked alarm may be reset in response to the alarm condition having not been met for a second predefined period of time.

Invocation of the alarm in a certain processing component may be conditional on the status data received from the preceding processing component in the signal path for vehicle information, which in this case is a processing component that represents the same layer or a lower layer in the three-layer framework described in the foregoing. As an example in this regard, the processing component may refrain from invoking an alarm even if its alarm condition is met in case the status data received from the preceding processing component indicates at least one status element to be active. In another example, the processing component may refrain from invoking an alarm even if its alarm condition is met in case the status data received from the preceding processing component indicates at least one status element of any of one or more predefined layer types to be active. Since an error state of a processing component typically results in error states in subsequent processing blocks of the signal path as well, conditional invocation of alarms outlined herein may serve as a useful tool in avoiding an excess of alarms that essentially spawn from the error state indicated by a processing component early in the signal path.

Along similar lines, invocation of the alarm in a certain processing component may be conditional on the status data received from the following processing component in the signal path for control information, which in this case is a processing component that represents the same layer or a higher layer in the three-layer framework described in the foregoing. As an example in this regard, the processing component may refrain from invoking an alarm even if its alarm condition is met in case the status data received from the following processing component in the signal path indicates at least one status element to be active. In another example, the processing component may refrain from invoking an alarm even if its alarm condition is met in case the status data received from the following processing component indicates at least one status element of any of one or more predefined layer types to be active. Since an error state of a processing component typically results in error states in preceding processing blocks of the signal path as well, conditional invocation of alarms outlined herein may serve as a useful tool in avoiding issuing control signals that would not have any effect due to errors in the signal path but that would, nevertheless, possibly result in an excess of alarms that essentially spawn from the error state indicated by a processing component further down the signal path.

Invocation of an alarm may result in storing an indication of the alarm e.g. in an alarm log which may be stored e.g. in the memory 190 or in a mass storage device for subsequent analysis by the user/deriver or by maintenance personnel. Alternatively or additionally, invocation of the alarm may result in presenting an indication of the alarm to a user/driver of the vehicle 104 via the user interface (e.g. via the display means 150). The indication of the alarm may include e.g. one or more of the following: an indication of the time of the alarm, indication of the status element(s) that caused invocation of the alarm, an indication of signal value(s) of the vehicle data that triggered the status element that resulted in invocation of the alarm, an indication of the alarm category (e.g. one of "debug", "information", "service", "warning", "critical"), etc. Alternatively or additionally, in case an alarm pertains to a signal path the provides UI input data to a widget of the current active instrument panel configuration, the alarm may be indicated via the widget by changing the visual appearance of the widget in the displayed instrument panel. As an example, the displayed color scheme of the widget may be changed in response to the alarm and/or the widget may be arranged to blink on the displayed instrument panel.

Aspects of operation of the vehicle information system 100 described in the foregoing by various examples may be described as steps of a method. As an example in this regard, Figure 12 depicts a method for providing a digital instrument panel in a motor vehicle. This method comprises storing a plurality of predefined digital instrument panel configurations, as indicated in block 210. Herein a digital instrument panel configuration defines at least the following: one or more UI components for conveying a respective piece of vehicle information to be included in the respective digital instrument panel, appearance of said one or more UI components in the respective digital instrument panel, and an activation event that defines a condition that causes selection of the respective instrument panel configuration.

The method depicted in Figure 12 further comprises selecting an active instrument panel configuration from said plurality of predefined digital instrument panel configurations in dependence of respective activation events defined for the plurality of predefined digital instrument panel configurations, as indicted in block 220, and displaying, in a display means arranged in a dashboard of the motor vehicle, a digital instrument panel in accordance with the active instrument panel configuration, as indicated in block 230.

The operations described in context of blocks 210, 220 and/or 230 may be further varied in a number of ways, e.g. as described in the foregoing by a number of examples that pertain to operation of various entities and/or components of the vehicle information system 100.

Referring back to Figure 2, the processor 180 is configured to read from and write to the memory 190. Although the processor 180 is depicted as a single component, the processor 180 may be implemented as one or more separate components. Similarly, although the memory 190 is illustrated as a single component, the memory 190 may be implemented as one or more separate components, some or all of which may be integrated/removable and/or may provide permanent / semi-permanent/ dynamic/cached storage.

The memory 190 may store the computer program comprising computer-executable instructions that control the operation of the vehicle information system 100' when loaded into the processor 190. As an example, the computer program may include one or more sequences of one or more instructions. The computer program may be provided as a computer program code. The processor 180 is able to load and execute the computer program by reading the one or more sequences of one or more instructions included therein from the memory 190. The one or more sequences of one or more instructions may be configured to, when executed by the processor 180, cause entities of the vehicle information system 100' to carry out operations, procedures and/or functions described in the foregoing in context of the vehicle information system 100, 100'. Hence, the vehicle information system 100' may comprise at least one processor 180 and at least one memory 190 including computer program code for one or more programs, the at least one memory 190 and the computer program code configured to, with the at least one processor 180, cause entities of the vehicle information system 100' to perform operations, procedures and/or functions described in the foregoing in context of the vehicle information system 100,100'. The computer program may be comprised in a computer program product. According to an example embodiment, the computer program product may comprise a non-transitory computer-readable medium. Thus, the computerprogram product may be provided e.g. as a computer program product that comprises at least one computer-readable non-transitory medium having program code stored thereon, the program code, when executed by the processor 180, causing entities of the vehicle information system 100' at least to perform operations, procedures and/or functions described in the foregoing in context of the vehicle information system 100,100'. The computer-readable non-transitory medium may comprise a memory device or a record medium such as a CD-ROM, a DVD, a Blu-ray disc or another article of manufacture that tangibly embodies the computer program. As another example, the computer program may be provided as a signal configured to reliably transfer the computer program.

Reference(s) to a processor should not be understood to encompass only programmable processors, but also dedicated circuits such as field-programmable gate arrays (FPGA), application specific circuits (ASIC), signal processors, etc.

## Claims

1. A method for providing a digital instrument panel for a motor vehicle (104), the method comprising
storing (210) a plurality of predefined digital instrument panel configurations, wherein a digital instrument panel configuration defines at least
- one or more user interface, Ul, components for conveying a respective piece of vehicle information to be included in the respective digital instrument panel,
- appearance of said one or more UI components in the respective digital instrument panel, and
- an activation event that defines a condition that causes selection of the respective instrument panel configuration;
selecting (220) an active instrument panel configuration from said plurality of predefined digital instrument panel configurations in dependence of respective activation events defined for the plurality of predefined digital instrument panel configurations;
displaying (230), in a display means (150) arranged in a dashboard of the motor vehicle (104), a digital instrument panel in accordance with the active instrument panel configuration; and creating a user-defined instrument panel configuration and storing the created user-defined instrument panel configuration as one of the plurality of predefined digital instrument panel configurations, said creating comprising receiving, via a user input means (160) provided in the motor vehicle (104), a user selection concerning
∘ one or more UI components from a set of a plurality of available predefined UI components for inclusion in the digital instrument panel,
∘ appearance of said one or more user-selected UI components in the digital instrument panel, and
∘ an activation event that defines a condition that is arranged to cause selection of the user-defined digital instrument panel configuration.

2. A method according to claim 1, wherein a UI component conveys vehicle information concerning at least one of the following:
- a value of a characteristic of the motor vehicle operation;
- a value derived in dependence of values of one or more characteristics of the motor vehicle operation,
- an indication of operational status of a function of the motor vehicle,
- an indication derived in dependence of respective operational statuses of one more functions of the motor vehicle.

3. A method according to claims 1 or 2, wherein the UI component is arranged to convey vehicle information obtained at least in part on basis of a vehicle information signal that comprises one of the following:
- a signal originating from a sensor arranged to measure a respective characteristic of the motor vehicle;
- a signal originating from a sensor arranged to indicate a status of a function of the motor vehicle.

4. A method according to any of claims 1 to 3, wherein the UI component comprises a widget that is arranged to convey vehicle information for presentation in the digital instrument panel in a predefined manner.

5. A method according to any of claims 1 to 4, wherein the appearance of a UI component in the digital instrument panel is defined by one or more of the following:
- a position of visual presentation of the UI component in the digital instrument panel;
- the size of visual presentation the UI component in the digital instrument panel;
- the aspect ratio of visual presentation of the UI component in the digital instrument panel;

6. A method according to any of claims 1 to 5, wherein said conditions defined by the activation event comprises a condition that depends on vehicle information obtained in one or more vehicle information signals, wherein a vehicle information signal comprises one of the following:
- a signal originating from a sensor arranged to measure a characteristic of the motor vehicle operation;
- a signal originating from a sensor arranged to indicate an operational status of a function of the motor vehicle.

7. A method according to any of claims 1 to 6, wherein said selecting comprises
observing one or more vehicle information signals in view of the respective activation events of the plurality of digital instrument panel configurations;
selecting a given digital instrument panel as the active instrument panel configuration in response to detecting the condition defined in the activation event of the given digital instrument panel.

8. A method according to claim 7, wherein
a digital instrument panel configuration further defines a priority level for the respective digital instrument panel configuration; and
said selecting further comprises selecting the given instrument panel configuration as the active instrument panel configuration provided that the priority level for the given instrument panel configuration is higher than that of the current active instrument panel configuration.

9. A method according to any of claims 1 to 8, wherein a digital instrument panel configuration further defines a deactivation event that defines a condition that causes deselection of the respective instrument panel configuration, and wherein said selecting further comprises observing one or more vehicle information signals in view of the deactivation event of the current active instrument panel configuration; and
deselecting the current active instrument panel configuration in response to detecting the condition defined in the deactivation event thereof.

10. A method according to claim 9, further comprising selecting, in response to deselection of the current active instrument panel configuration, one of the following as the active instrument panel configuration:
the most recently applied digital instrument panel configuration that is different from the current active instrument panel configuration;
a digital instrument panel configuration of the plurality of predefined digital instrument panel configurations that is designated as a default instrument panel configuration.

11. A method according to any of claims 1 to 10, wherein said creating further comprises receiving a user selection concerning one or more of the following:
- a deactivation event that defines a condition that is arranged to cause deselection of the user-defined digital instrument panel configuration;
a priority level for the user-defined digital instrument panel configuration.

12. A computer program comprising computer readable program code configured to cause performing of the method of any of claims 1 to 11 when said program code is run on a computing apparatus.

13. An arrangement (140) for providing a digital instrument panel for a motor vehicle (104), the arrangement (140) comprising
an instrument panel storing means (143) for storing a plurality of predefined digital instrument panel configurations, wherein a digital instrument panel configuration defines at least
- one or more user interface, Ul, components for conveying a respective piece of vehicle information to be included in the respective digital instrument panel,
- appearance of said one or more UI components in the respective digital instrument panel, and
- an activation event that defines a condition that causes selection of the respective instrument panel configuration;
an instrument panel selection means (145) for selecting an active instrument panel configuration from said plurality of predefined digital instrument panel configurations in dependence of respective activation events defined for the plurality of predefined digital instrument panel configurations; and
an instrument panel display control means (147) for controlling displaying of a digital instrument panel in accordance with the active instrument panel configuration via a display means (150) arranged in a dashboard of the motor vehicle (104), the arrangement (140) comprises an instrument panel configuration means (149) arranged to enable creation of a user-defined instrument panel configuration and store the created user-defined instrument panel configuration as one of the plurality of predefined digital instrument panel configurations, said creating comprising receiving, via a user input means (160) provided in the motor vehicle (104), a user selection concerning
∘ one or more UI components from a set of a plurality of available predefined UI components for inclusion in the digital instrument panel,
∘ appearance of said one or more user-selected UI components in the digital instrument panel,
∘ an activation event that defines a condition that is arranged to cause selection of the user-defined digital instrument panel configuration.

## Patentansprüche

1. Verfahren zum Bereitstellen einer digitalen Instrumententafel für ein Kraftfahrzeug (104), wobei das Verfahren Folgendes umfasst
Speichern (210) einer Vielzahl von vordefinierten digitalen Instrumententafelkonfigurationen, wobei eine digitale Instrumententafelkonfiguration mindestens Folgendes definiert
- eine oder mehrere Benutzeroberflächenkomponenten, Ul, zum Übermitteln einer jeweiligen Fahrzeuginformation, die in die jeweilige digitale Instrumententafel aufgenommen werden soll,
- Erscheinen der einen oder mehreren UI-Komponenten in der jeweiligen digitalen Instrumententafel und
- ein Aktivierungsereignis, das einen Zustand definiert, der die Auswahl der jeweiligen Instrumententafelkonfiguration bewirkt;
Auswählen (220) einer aktiven Instrumententafelkonfiguration aus der Vielzahl vordefinierter digitaler Instrumententafelkonfigurationen in Abhängigkeit von jeweiligen Aktivierungsereignissen, die für die Vielzahl vordefinierter digitaler Instrumententafelkonfigurationen definiert sind; Anzeigen (230) in einem Anzeigemittel (150), das in einem Armaturenbrett des Kraftfahrzeugs (104) angeordnet ist, einer digitalen Instrumententafel gemäß der aktiven Instrumententafelkonfiguration; und Erstellen einer benutzerdefinierten Instrumententafelkonfiguration und Speichern der erstellten benutzerdefinierten Instrumententafelkonfiguration als eine der Vielzahl von vordefinierten digitalen Instrumententafelkonfigurationen, wobei das Erstellen das Empfangen über ein in dem Kraftfahrzeug (104) vorgesehenes Benutzereingabemittel (160) einer Benutzerauswahl betreffend Folgendes umfasst:
∘ eine oder mehrere Ul-Komponenten aus einem Satz mehrerer verfügbarer vordefinierter UI-Komponenten zur Aufnahme in die digitale Instrumententafel;
∘ Erscheinen der einen oder mehreren vom Benutzer ausgewählten UI-Komponenten in der digitalen Instrumententafel und
∘ ein Aktivierungsereignis, das eine Bedingung definiert, die so angeordnet ist, dass die benutzerdefinierte Konfiguration der digitalen Instrumententafel ausgewählt wird.

2. Verfahren nach Anspruch 1, wobei eine Ul-Komponente Fahrzeuginformationen bezüglich mindestens einer der folgenden übermittelt:
- eines Werts einer Eigenschaft des Kraftfahrzeugbetriebs;
- eines Werts, der in Abhängigkeit von Werten einer oder mehrerer Eigenschaften des Kraftfahrzeugbetriebs abgeleitet wird;
- einer Anzeige des Betriebszustands einer Funktion des Kraftfahrzeugs,
- einer Anzeige, die in Abhängigkeit von den jeweiligen Betriebszuständen einer weiteren Funktion des Kraftfahrzeugs abgeleitet wird.

3. Verfahren nach den Ansprüchen 1 oder 2, wobei die UI-Komponente angeordnet ist, um Fahrzeuginformationen zu übermitteln, die zumindest teilweise auf der Basis eines Fahrzeuginformationssignals erhalten wurden, das eines der folgenden umfasst:
- ein Signal, das von einem Sensor stammt, der angeordnet ist, um eine jeweilige Eigenschaft des Kraftfahrzeugs zu messen;
- ein Signal, das von einem Sensor stammt, der angeordnet ist, um den Status einer Funktion des Kraftfahrzeugs anzuzeigen.

4. Verfahren nach einem der Ansprüche 1 bis 3, wobei die Ul-Komponente ein Widget umfasst, das angeordnet ist, um Fahrzeuginformationen zur Darstellung in der digitalen Instrumententafel auf eine vordefinierte Weise zu übermitteln.

5. Verfahren nach einem der Ansprüche 1 bis 4, wobei das Erscheinen einer Ul-Komponente in der digitalen Instrumententafel durch eines oder mehrere der folgenden definiert ist:
- eine Position der visuellen Darstellung der Ul-Komponente in der digitalen Instrumententafel;
- die Größe der visuellen Darstellung der Ul-Komponente in der digitalen Instrumententafel;
- das Seitenverhältnis der visuellen Darstellung der Ul-Komponente in der digitalen Instrumententafel.

6. Verfahren nach einem der Ansprüche 1 bis 5, wobei die durch das Aktivierungsereignis definierten Bedingungen eine Bedingung umfassen, die von Fahrzeuginformationen abhängt, die in einem oder mehreren Fahrzeuginformationssignalen erhalten werden, wobei ein Fahrzeuginformationssignal eines der folgenden umfasst:
- ein Signal, das von einem Sensor stammt, der angeordnet ist, um eine Eigenschaft des Kraftfahrzeugbetriebs zu messen;
- ein Signal, das von einem Sensor stammt, der einen Betriebszustand einer Funktion des Kraftfahrzeugs anzeigt.

7. Verfahren nach einem der Ansprüche 1 bis 6, wobei das Auswählen Folgendes umfasst
Beobachten eines oder mehrerer Fahrzeuginformationssignale im Hinblick auf die jeweiligen Aktivierungsereignisse der Vielzahl digitaler Instrumententafelkonfigurationen;
Auswählen einer bestimmten digitalen Instrumententafel als aktive Instrumententafelkonfiguration als Reaktion auf das Erkennen des im Aktivierungsereignis der gegebenen digitalen Instrumententafel definierten Zustands.

8. Verfahren nach Anspruch 7, wobei
eine digitale Instrumententafelkonfiguration ferner eine Prioritätsstufe für die jeweilige digitale Instrumententafelkonfiguration definiert, und
das Auswählen ferner das Auswählen der gegebenen Instrumententafelkonfiguration als aktive Instrumententafelkonfiguration umfasst, vorausgesetzt, die Prioritätsstufe für die gegebene Instrumententafelkonfiguration höher als die der aktuellen aktiven Instrumententafelkonfiguration ist.

9. Verfahren nach einem der Ansprüche 1 bis 8, wobei eine digitale Instrumententafelkonfiguration ferner ein Deaktivierungsereignis definiert, das einen Zustand definiert, der ein Abwählen der jeweiligen Instrumententafelkonfiguration verursacht, und wobei das Auswählen ferner das Beobachten eines oder mehrerer Fahrzeuginformationssignale im Hinblick auf das Deaktivierungsereignis der aktuellen aktiven Instrumententafelkonfiguration umfasst; und
Abwählen der aktuellen aktiven Instrumententafelkonfiguration als Reaktion auf das Erkennen des Zustands, der in dem Deaktivierungsereignis davon definiert ist.

10. Verfahren nach Anspruch 9, ferner umfassend das Auswählen einer der folgenden als aktive Instrumententafelkonfiguration als Reaktion auf das Abwählen der aktuellen aktiven Instrumententafelkonfiguration:
die zuletzt angewendete digitale Instrumententafelkonfiguration, die sich von der aktuell aktiven Instrumententafelkonfiguration unterscheidet;
eine digitale Instrumententafelkonfiguration aus der Vielzahl von vordefinierten digitalen Instrumententafelkonfigurationen, die als Standardinstrumententafelkonfiguration bezeichnet wird.

11. Verfahren nach einem der Ansprüche 1 bis 10, wobei das Erstellen ferner das Empfangen einer Benutzerauswahl bezüglich einer oder mehrerer der folgenden umfasst:
- ein Deaktivierungsereignis, das einen Zustand definiert, der so angeordnet ist, dass die benutzerdefinierte Konfiguration der digitalen Instrumententafel abgewählt wird;
eine Prioritätsstufe für die benutzerdefinierte Konfiguration der digitalen Instrumententafel.

12. Computerprogramm mit computerlesbarem Programmcode, der konfiguriert ist, um die Durchführung des Verfahrens nach einem der Ansprüche 1 bis 11 zu bewirken, wenn der Programmcode auf einer Rechenvorrichtung ausgeführt wird.

13. Anordnung (140) zum Bereitstellen einer digitalen Instrumententafel für ein Kraftfahrzeug (104), wobei die Anordnung (140) Folgendes umfasst:
eine Instrumententafel-Speichermittel (143) zum Speichern einer Vielzahl vordefinierter digitaler Instrumententafelkonfigurationen, wobei eine digitale Instrumententafelkonfiguration mindestens Folgendes definiert
- eine oder mehrere Benutzeroberflächenkomponenten, Ul, zum Übermitteln einer jeweiligen Fahrzeuginformation, die in die jeweilige digitale Instrumententafel aufgenommen werden soll;
- Erscheinen der einen oder mehreren UI-Komponenten in der jeweiligen digitalen Instrumententafel, und
- ein Aktivierungsereignis, das einen Zustand definiert, der die Auswahl der jeweiligen Instrumententafelkonfiguration bewirkt;
eine Instrumententafelauswahleinrichtung (145) zum Auswählen einer aktiven Instrumententafelkonfiguration aus der Vielzahl vordefinierter digitaler Instrumententafelkonfigurationen in Abhängigkeit von jeweiligen Aktivierungsereignissen, die für die Vielzahl vordefinierter digitaler Instrumententafelkonfigurationen definiert sind; und
eine Instrumententafel-Anzeigesteuereinrichtung (147) zum Steuern der Anzeige einer digitalen Instrumententafel gemäß der aktiven Instrumententafelkonfiguration über ein Anzeigemittel (150), das in einem Armaturenbrett des Kraftfahrzeugs (104) angeordnet ist, wobei die Anordnung (140) eine Instrumententafel-Konfigurationseinrichtung (149) umfasst, die angeordnet ist, um das Erstellen einer benutzerdefinierten Instrumententafelkonfiguration zu ermöglichen und die erstellte benutzerdefinierte Instrumententafelkonfiguration als eine der Vielzahl von vordefinierten digitalen Instrumententafelkonfigurationen zu speichern, wobei das Erstellen das Empfangen einer Benutzerauswahl über ein in dem Kraftfahrzeug (104) vorgesehenes Benutzereingabemittel (160) betreffend Folgendes umfasst
∘ eine oder mehrere Ul-Komponenten aus einem Satz einer Vielzahl von verfügbaren vordefinierten UI-Komponenten zur Aufnahme in die digitale Instrumententafel;
∘ Erscheinen einer oder mehrerer vom Benutzer ausgewählter UI-Komponenten in der digitalen Instrumententafel;
∘ ein Aktivierungsereignis, das eine Bedingung definiert, die so angeordnet ist, dass die benutzerdefinierte Konfiguration der digitalen Instrumententafel ausgewählt wird.

## Revendications

1. Procédé de fourniture d'un tableau de bord numérique pour un véhicule automobile (104), le procédé comprenant
le stockage (210) d'une pluralité de configurations prédéfinies du tableau de bord numérique, dans lequel une configuration du tableau de bord numérique définit au moins
- un ou plusieurs composants d'interface utilisateur, UI, pour transmettre une information du véhicule respective à inclure dans le tableau de bord numérique respectif,
- l'apparence desdits un ou plusieurs composants UI dans le tableau de bord numérique respectif, et
- un événement d'activation qui définit une condition qui provoque la sélection de la configuration respective du tableau de bord ;
la sélection (220) d'une configuration active du tableau de bord à partir de ladite pluralité de configurations prédéfinies du tableau de bord numérique en fonction d'événements d'activation respectifs définis pour la pluralité de configurations prédéfinies du tableau de bord numérique ;
l'affichage (230), dans un moyen d'affichage (150) agencé dans une planche de bord du véhicule automobile (104), d'un tableau de bord numérique conformément à la configuration active du tableau de bord ; et
la création d'une configuration du tableau de bord définie par l'utilisateur et le stockage de la configuration du tableau de bord définie par l'utilisateur créée comme l'une parmi la pluralité de configurations prédéfinies du tableau de bord numérique, ladite création comprenant la réception, par l'intermédiaire d'un moyen d'entrée utilisateur (160) prévu dans le véhicule automobile (104), d'une sélection de l'utilisateur concernant
∘ un ou plusieurs composants UI provenant d'un ensemble d'une pluralité de composants UI prédéfinis disponibles à inclure dans le tableau de bord numérique,
∘ l'apparence desdits un ou plusieurs composants UI sélectionnés par l'utilisateur dans le tableau de bord numérique, et
∘ un événement d'activation qui définit une condition qui est conçue pour provoquer la sélection de la configuration du tableau de bord numérique définie par l'utilisateur.

2. Procédé selon la revendication 1, dans lequel un composant UI transmet des informations du véhicule concernant au moins l'un des éléments suivants :
- une valeur d'une caractéristique du fonctionnement du véhicule automobile ;
- une valeur dérivée en fonction de valeurs d'une ou de plusieurs caractéristiques du fonctionnement du véhicule automobile,
- une indication de l'état opérationnel d'une fonction du véhicule automobile,
- une indication dérivée en fonction des états opérationnels respectifs d'une ou de plusieurs fonctions du véhicule automobile.

3. Procédé selon la revendication 1 ou 2, dans lequel le composant UI est conçu pour transmettre des informations du véhicule obtenues au moins en partie sur la base d'un signal d'informations du véhicule qui comprend l'un des signaux suivants :
- un signal provenant d'un capteur conçu pour mesurer une caractéristique respective du véhicule automobile ;
- un signal provenant d'un capteur conçu pour indiquer un état d'une fonction du véhicule automobile.

4. Procédé selon l'une quelconque des revendications 1 à 3, dans lequel le composant UI comprend un objet fenêtre qui est conçu pour transmettre des informations du véhicule à présenter sur le tableau de bord numérique d'une manière prédéfinie.

5. Procédé selon l'une quelconque des revendications 1 à 4, dans lequel l'apparence d'un composant UI dans le tableau de bord numérique est définie par un ou plusieurs des éléments suivants :
- une position de présentation visuelle du composant UI dans le tableau de bord numérique ;
- la taille de la présentation visuelle du composant UI dans le tableau de bord numérique ;
- le rapport hauteur/largeur de la présentation visuelle du composant UI dans le tableau de bord numérique ;

6. Procédé selon l'une quelconque des revendications 1 à 5, dans lequel lesdites conditions définies par l'événement d'activation comprennent une condition qui dépend des informations du véhicule obtenues dans un ou plusieurs signaux d'informations du véhicule, dans lequel un signal d'informations du véhicule comprend l'un des signaux suivants :
- un signal provenant d'un capteur conçu pour mesurer une caractéristique du fonctionnement du véhicule automobile ;
- un signal provenant d'un capteur conçu pour indiquer un état opérationnel d'une fonction du véhicule automobile.

7. Procédé selon l'une quelconque des revendications 1 à 6, dans lequel ladite sélection comprend l'observation d'un ou de plusieurs signaux d'informations du véhicule en tenant compte des événements d'activation respectifs de la pluralité de configurations du tableau de bord numérique ;
la sélection d'un tableau de bord numérique donné comme configuration active du tableau de bord en réponse à la détection de la condition définie dans l'événement d'activation du tableau de bord numérique donné.

8. Procédé selon la revendication 7, dans lequel une configuration du tableau de bord numérique définit en outre un niveau de priorité pour la configuration respective du tableau de bord numérique ; et
ladite sélection comprend en outre la sélection de la configuration donnée du tableau de bord comme configuration active du tableau de bord à condition que le niveau de priorité pour la configuration donnée du tableau de bord soit supérieur à celui de la configuration active actuelle du tableau de bord.

9. Procédé selon l'une quelconque des revendications 1 à 8, dans lequel une configuration du tableau de bord numérique définit en outre un événement de désactivation qui définit une condition qui provoque la désélection de la configuration respective du tableau de bord, et dans lequel ladite sélection comprend en outre
l'observation d'un ou de plusieurs signaux d'informations du véhicule en tenant compte de l'événement de désactivation de la configuration active actuelle du tableau de bord ; et
la désélection de la configuration active actuelle du tableau de bord en réponse à la détection de la condition définie dans l'événement de désactivation de celle-ci.

10. Procédé selon la revendication 9, comprenant en outre la sélection, en réponse à la désélection de la configuration active actuelle du tableau de bord, d'un des éléments suivants en tant que configuration active du tableau de bord :
la configuration du tableau de bord numérique la plus récemment appliquée qui est différente de la configuration active actuelle du tableau de bord ;
une configuration du tableau de bord numérique parmi la pluralité de configurations prédéfinies du tableau de bord numérique qui est désignée en tant que configuration du tableau de bord par défaut.

11. Procédé selon l'une quelconque des revendications 1 à 10, dans lequel ladite création comprend en outre la réception d'une sélection de l'utilisateur concernant un ou plusieurs des éléments suivants :
- un événement de désactivation qui définit une condition qui est conçue pour provoquer la désélection de la configuration du tableau de bord numérique définie par l'utilisateur ;
un niveau de priorité pour la configuration du tableau de bord numérique définie par l'utilisateur.

12. Programme informatique comprenant un code de programme lisible par ordinateur configuré pour provoquer la mise en œuvre du procédé selon l'une quelconque des revendications 1 à 11 lorsque ledit code de programme est exécuté sur un appareil informatique.

13. Système (140) permettant de fournir un tableau de bord numérique pour un véhicule automobile (104), le système (140) comprenant
un moyen de stockage du tableau de bord (143) permettant de stocker une pluralité de configurations prédéfinies du tableau de bord numérique, dans lequel une configuration du tableau de bord numérique définit au moins
- un ou plusieurs composants d'interface utilisateur, UI, pour transmettre une information du véhicule respective à inclure dans le tableau de bord numérique respectif,
- l'apparence desdits un ou plusieurs composants UI dans le tableau de bord numérique respectif, et
- un événement d'activation qui définit une condition qui provoque la sélection de la configuration respective du tableau de bord ;
un moyen de sélection du tableau de bord (145) permettant de sélectionner une configuration active du tableau de bord à partir de ladite pluralité de configurations prédéfinies du tableau de bord numérique en fonction d'événements d'activation respectifs définis pour la pluralité de configurations prédéfinies du tableau de bord numérique ; et
un moyen de commande d'affichage du tableau de bord (147) permettant de commander l'affichage d'un tableau de bord numérique conformément à la configuration active du tableau de bord par l'intermédiaire d'un moyen d'affichage (150) agencé dans une planche de bord du véhicule automobile (104), le système (140) comprend un moyen de configuration du tableau de bord (149) conçu pour permettre la création d'une configuration du tableau de bord définie par l'utilisateur et stocker la configuration du tableau de bord définie par l'utilisateur créée comme l'une parmi la pluralité de configurations prédéfinies du tableau de bord numérique, ladite création comprenant la réception, par l'intermédiaire d'un moyen d'entrée utilisateur (160) prévu dans le véhicule automobile (104), d'une sélection de l'utilisateur concernant
∘ un ou plusieurs composants UI provenant d'un ensemble d'une pluralité de composants UI prédéfinis disponibles à inclure dans le tableau de bord numérique,
∘ l'apparence desdits un ou plusieurs composants UI sélectionnés par l'utilisateur dans le tableau de bord numérique,
∘ un événement d'activation qui définit une condition qui est conçue pour provoquer la sélection de la configuration du tableau de bord numérique définie par l'utilisateur.
